(19) Europäisches Patentamt
European Patent Office
Office européen des brevets

(11) EP 4 357 383 B1

(12) EUROPEAN PATENT SPECIFICATION

(45) Date of publication and mention of the grant of the patent:
**31.12.2025 Bulletin 2026/01**

(21) Application number: **23200992.8**

(22) Date of filing: **29.09.2023**

(51) International Patent Classification (IPC):
***C08G 18/10*** (2006.01) ***C08G 18/22*** (2006.01)
***C08G 18/48*** (2006.01) ***C08G 18/61*** (2006.01)
***C08G 18/73*** (2006.01) ***C08G 18/75*** (2006.01)
***C08G 18/76*** (2006.01) ***C09D 175/04*** (2006.01)

(52) Cooperative Patent Classification (CPC):
(C-Sets available)
**C08G 18/73; C08G 18/10; C08G 18/222; C08G 18/4825; C08G 18/4833; C08G 18/61; C08G 18/753; C08G 18/755; C08G 18/758; C08G 18/7671; C09D 175/04** (Cont.)

(54) **SILOXANE-MODIFIED POLYURETHANE RESIN COATING AGENT COMPOSITION**

SILOXANMODIFIZIERTE POLYURETHANHARZBESCHICHTUNGSMITTELZUSAMMENSETZUNG

COMPOSITION D'AGENT DE REVÊTEMENT À BASE DE RÉSINE DE POLYURÉTHANE MODIFIÉE PAR DU SILOXANE

(84) Designated Contracting States:
**DE FR GB**

(30) Priority: **18.10.2022 JP 2022166745**
**07.09.2023 JP 2023144969**

(43) Date of publication of application:
**24.04.2024 Bulletin 2024/17**

(60) Divisional application:
**25216753.1**

(73) Proprietor: **Shin-Etsu Chemical Co., Ltd.**
**Tokyo (JP)**

(72) Inventors:
- **SAKUTA, Koji**
  **Annaka-shi (JP)**
- **ANDO, Yuji**
  **Annaka-shi (JP)**
- **MEGURIYA, Noriyuki**
  **Annaka-shi (JP)**

(74) Representative: **Mewburn Ellis LLP**
**Aurora Building**
**Counterslip**
**Bristol BS1 6BX (GB)**

(56) References cited:
**EP-A1- 0 277 816** **EP-A1- 3 279 373**
**CN-A- 115 074 008** **US-A- 4 623 347**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08G 18/10, C08G 18/3206;**
**C08G 18/10, C08G 18/3212;**
**C08G 18/10, C08G 18/3234;**
**C08G 18/10, C08G 18/3243**

**Description**

TECHNICAL FIELD

The invention relates to a siloxane-modified polyurethane resin coating agent composition, and more particularly to a siloxane-modified polyurethane resin coating agent composition capable of forming a siloxane-modified polyurethane resin film which is excellent in gas permeability, strength, and elongation in an easy manner by simply drying and removing a volatile organic solvent.

BACKGROUND

Polyurethane resin has excellent tensile strength, bending resistance, abrasion resistance, and oil resistance, and can be prepared to a thermoplastic or thermosetting resin depending on the composition, and thus the resin can be processed into various shapes.

Silicone resin is known to have various characteristics such as excellent heat resistance, water repellency, slippage, and electrical insulation properties, and also have high gas permeability.

In recent years, gas separation membranes for separating and concentrating carbon dioxide gas from waste gas or air have been developed by using these resins. But, gas permeability and selectivity are insufficient with a single use of the resin. Thus, a hybrid material having a composite material blended in the resin has been developed.

As the composite material, use is made of various materials such as silica, alumina, zeolite, and metal organic frameworks (MOF).

On the other hand, a resin such as polyvinyl alcohol, polyimide, polysulfone, or polyether has been proposed for a binder resin to be combined with the composite material (see Patent Documents 1 to 5). In particular, a resin called PIM-1 (condensate of 5,5',6,6'-tetrahydroxy-3,3,3',3'-tetramethyl-1,1'-spirobisindane and tetrafluoro terephthalonitrile) (see Non-Patent Document 1) is rigid and has high gas permeability.

However, PIM-1 has a problem that when a film is produced from a solution of this polymer, the film tends to shrink during volatilization of the solvent. In addition, reactants are expensive and a purification process is complicated, thus it has difficulty in industrial use.

Silicone resin compositions are also promising binder resin compositions. In particular, addition curable compositions are useful because it is easy to form a thin film and increase in strength. However, if a functional group containing a hetero atom such as an amino group is present in the composite material to be blended, it becomes a catalyst poison of platinum, so that the addition curable composition undergoes curing inhibition.

In order to solve this point, Patent Document 3 proposes a gas separation membrane using a condensation-curable silicone resin composition. But, the strength is low, so that it is difficult to make a thin film. In addition, since it is a moisture-curable composition, it would take a long time to complete the curing, and it is not suitable for a method for continuously forming a gas separation membrane which is advantageous in terms of cost.

Coating compositions comprising a siloxane-modified polyurethane are also known from US 4 623 347 A.

As described above, a resin for the binder is desired which is easily and inexpensively available and has excellent strength and flexibility, which is also soluble in a volatile solvent and is suitable for a continuous film formation. A coating agent composition which can be applicable to a continuous film formation is also desired.

Citation List

| | |
|---|---|
| Patent Document 1: | JP-A 2021-185233 |
| Patent Document 2: | JP-A 2010-222228 |
| Patent Document 3: | JP-A 2012-224777 |
| Patent Document 4: | WO 2017/179738 |
| Patent Document 5: | WO 2018/038027 |
| Non-Patent Document 1: | P. M. Budd, et al., J. Memb. Sci., 325, (2008), 851-860 |

SUMMARY OF THE INVENTION

An object of the invention is to provide a siloxane-modified polyurethane resin coating agent composition containing a resin serving as a starting material which is easily synthesized and provides a thin film having a high resin

physical property value such as tensile strength and high gas permeability, which thin film can be formed in a simple manner by drying and removing a solvent since the resin serving as a starting material is soluble in a volatile organic solvent.

The inventors have found that a coating agent composition containing a resin obtained by curing a siloxane-modified polyurethane resin composition having a specific composition can solve the above problems. It is noted that in the invention, a condition where "the resin is soluble in a volatile organic solvent" or "the resin is dissolved" encompasses a condition where the composition gives a transparent, light milky white, or milky white appearance when evaluated by visual observation.

In one aspect, the invention provides a siloxane-modified polyurethane resin coating agent composition containing the following components (A) and (B):

(A) a siloxane-modified polyurethane resin; and
(B) a volatile organic solvent having a boiling point of 180°C or less at 1 atm,

wherein component (A) is a cured product of a siloxane-modified polyurethane resin composition including the following components (a) to (c):

(a) a hydroxyl group-containing organosilicon compound having the following formula (1):

$$(R^1{}_3SiO_{1/2})_k(R^1{}_2SiO_{2/2})_p(R^1SiO_{3/2})_q(SiO_{4/2})_r \quad (1)$$

wherein $R^1$ is each independently a monovalent hydrocarbon group of 1 to 10 carbon atoms or a group selected from the following formulae (2) and (3) with the proviso that two of all $R^1$ groups are groups having the following formula (3), k, p, q, and r are an integer of k > 0, an integer of p ≥ 0, an integer of q ≥ 0, and an integer of r ≥ 0, respectively, provided that k+p+q is an integer of k+p+q ≥ 2, and an arrangement of the siloxane units in parentheses is indefinite (i.e. the formula (1) represents the composition and stoichiometry rather than the arrangement of relevant siloxane units),

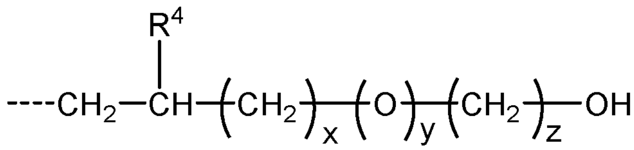
(2)

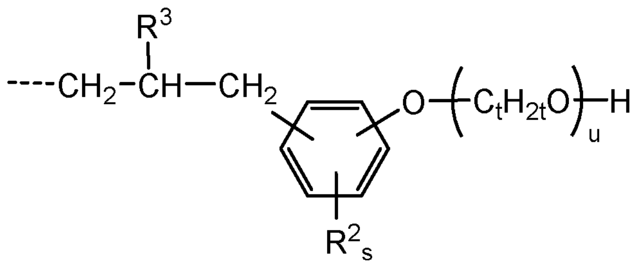
(3)

wherein in formula (2), $R^4$ is hydrogen or methyl, x is an integer of 0 to 4, y is 0 or 1, and z is an integer of 0 to 6, when y is 1, x is an integer of 0 to 4, z is an integer of 1 to 6, and x+z is an integer of 1 to 10, and when y is 0, x is an integer of 0 to 4, z is an integer of 0 to 6, and x+z is an integer of 1 to 10,
in formula (3), $R^2$ is each independently hydrogen or a group selected from a monovalent hydrocarbon group of 1 to 5 carbon atoms and an alkoxy group of 1 to 5 carbon atoms, $R^3$ is hydrogen or methyl, s is an integer of 0 to 4, t is an integer of 2 to 4, u is a number of 1 to 3, and a broken line donates a valence bond;

(b) a diisocyanate compound having two isocyanate groups per molecule; and
(c) an organic compound having two functional groups per molecule capable of reacting with an isocyanate group,

wherein amounts of components (a) to (c) are m mole of component (c) and (1+m) × (0.9 to 1.2) mole of component (b) each per 1 mole of component (a), and m is 0.2 mole or more and less than 1.6 moles, and
wherein a content of component (B) is 50 to 98% by weight of the whole coating agent composition.

Preferably, y in the group of formula (2) is 0.

Also preferably, a group of formula (3) is a group having the following formula (3.1a), (3.2a), or (3.3a):

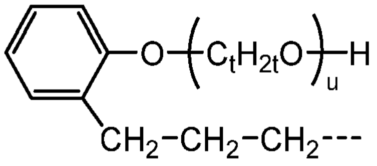

(3.1a)

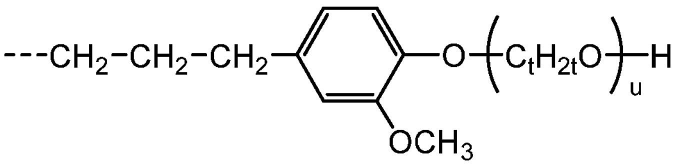

(3.2a)

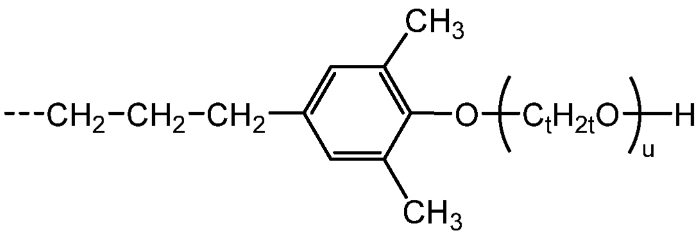

(3.3a)

wherein t and u are as defined above, and a broken line denotes a valence bond.

Further preferably, component (b) has the following formula (7):

OCN-Q-NCO (7)

wherein Q is a divalent hydrocarbon group of 1 to 20 carbon atoms.

In formula (7), Q is preferably a linear or branched alkylene group or an alkylene group having an alicyclic structure.

Component (B) preferably contains an oxygen atom in a molecule and has a boiling point of 120°C or less at 1 atm.

The siloxane-modified polyurethane resin composition preferably further contains (d) a urethane curing catalyst.

In another aspect, the invention provides a coating film formed from the coating agent composition defined above.

Also provided is an article including the coating film defined above.

## ADVANTAGEOUS EFFECTS

The siloxane-modified polyurethane resin coating agent composition of the invention can be provided at low cast with the resin serving as a starting material which can be synthesized in a simple manner. In addition, the resin serving as a starting material is soluble in a volatile organic solvent, and thus a smooth thin film having excellent gas permeability, strength, and flexibility can be easily obtained in a simple manner by drying and removing the solvent.

## FURTHER EXPLANATIONS; OPTIONS AND PREFERENCES

Now, the invention is described in detail.

A siloxane-modified polyurethane resin coating agent composition of the invention contains the following components (A) and (B).

(A) Siloxane-modified polyurethane resin

(B) Volatile organic solvent having a boiling point of 180°C or less at 1 atm

Component (A)

Component (A) is a siloxane-modified polyurethane resin obtained by curing a siloxane-modified polyurethane resin composition containing the following components (a) to (c).

(1-1) Component (a)

Component (a) is a hydroxyl group-containing organosilicon compound having the following formula (1).

$$(R^1{}_3SiO_{1/2})_k(R^1{}_2SiO_{2/2})_p(R^1SiO_{3/2})_q(SiO_{4/2})_r \qquad (1)$$

In formula (1), $R^1$ is each independently a monovalent hydrocarbon group of 1 to 10 carbon atoms or a group selected from the following formulae (2) and (3) with the proviso that two of all $R^1$ groups are groups having the following formula (3).

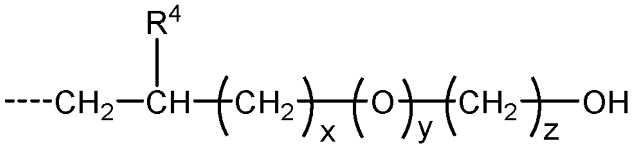

(2)

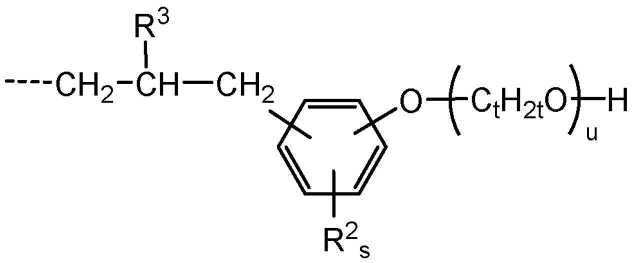

(3)

Herein, a broken line donates a valence bond.

In formula (1), the monovalent hydrocarbon group of 1 to 10 carbon atoms represented by $R^1$ may be linear, branched, or cyclic, and is an alkyl group of 1 to 10 carbon atoms, preferably 1 to 6 carbon atoms, more preferably 1 to 3 carbon atoms; a cycloalkyl group of 5 to 10 carbon atoms, preferably 5 to 8 carbon atoms; an aryl group of 6 to 10 carbon atoms, preferably 6 to 8 carbon atoms; or an aralkyl group of 7 to 10 carbon atoms.

Examples of the monovalent hydrocarbon group represented by $R^1$ include alkyl groups such as methyl, ethyl, n-propyl, isopropyl, n-butyl, isobutyl, s-butyl, t-butyl, n-pentyl, n-hexyl, n-heptyl, n-octyl, n-nonyl, and n-decyl; cycloalkyl groups such as cyclopentyl and cyclohexyl; aryl groups such as phenyl and tolyl; and aralkyl groups such as benzyl and phenethyl.

Of these, $R^1$ is preferably methyl, ethyl, or phenyl.

In formula (2), $R^4$ is hydrogen or methyl, x is an integer of 0 to 4, y is 0 or 1, and z is an integer of 0 to 6, and when y is 1, x is an integer of 0 to 4, z is an integer of 1 to 6, and x+z is an integer of 1 to 10, and when y is 0, x is an integer of 0 to 4, z is an integer of 0 to 6, and x+z is an integer of 1 to 10. Preferably, y is 0.

Examples of the group having the formula (2) include those having the following formulae, but not limited thereto. Of these, the groups having the formulae (2.2b), (2.4f), (2.4h), and (2.4k) are preferable.

$----CH_2\text{-}CH_2\text{-}O\text{-}CH_2\text{-}CH_2\text{-}OH$ (2.1a)

$---- CH_2\text{-}CH_2\text{-}0\text{-}CH_2\text{-}CH_2\text{-}CH_2\text{-}OH$ (2.1b)

$----CH_2\text{-}CH_2\text{-}O\text{-}CH_2\text{-}CH_2\text{-}CH_2\text{-}CH_2\text{-}OH$ (2.1c)

$----CH_2\text{-}CH_2\text{-}CH_2\text{-}O\text{-}CH_2\text{-}OH$ (2.2a)

$----CH_2\text{-}CH_2\text{-}CH_2\text{-}O\text{-}CH_2\text{-}CH_2\text{-}OH$ (2.2b)

$---- CH_2\text{-}CH_2\text{-}CH_2\text{-}O\text{-}CH_2\text{-}CH_2\text{-}CH_2\text{-}OH$ (2.2c)

$----CH_2-CH_2-CH_2-O-CH_2-CH_2-CH_2-CH_2-OH$ (2.2d)

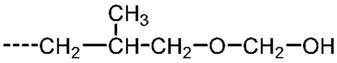
(2.2e)

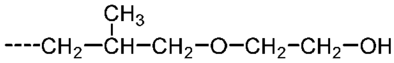
(2.2f)

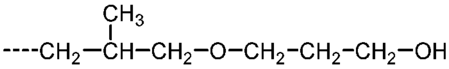
(2.2g)

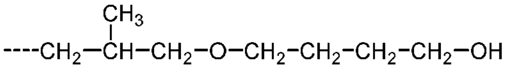
(2.2h)

$----CH_2-CH_2-CH_2-CH_2-O-CH_2-OH$ (2.3a)

$----\ CH_2-CH_2-CH_2-CH_2-O-CH_2-CH_2-OH$ (2.3b)

$\mathbf{----CH_2-CH_2-CH_2-CH_2-O-CH_2-CH_2-CH_2-OH}$ (2.3c)

$----\ CH_2-CH_2-CH_2-CH_2-O-CH_2-CH_2-CH_2-CH_2-OH$ (2.3d)

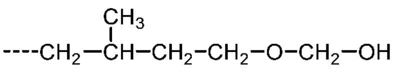
(2.3e)

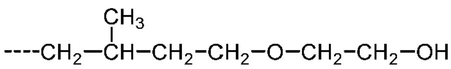
(2.3f)

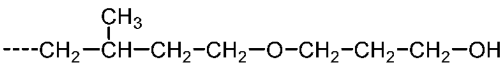
(2.3g)

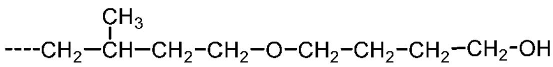
(2.3h)

$----CH_2-CH_2-CH_2-OH$ (2.4a)

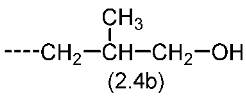
(2.4b)

$----\ CH_2-CH_2-CH_2-CH_2-OH$ (2.4c)

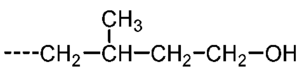
(2.4d)

$----\ CH_2-CH_2-CH_2-CH_2-CH_2-OH$ (2.4e)

$----CH_2-CH_2-CH_2-CH_2-CH_2-CH_2-OH$ (2.49)

$----CH_2\ -CH_2\ -CH_2\ -CH_2\ -CH_2\ -CH_2\ -CH_2-OH$ (2.4g)

$$---- CH_2\text{-}CH_2\text{-}CH_2\text{-}CH_2\text{-}CH_2\text{-}CH_2\text{-}CH_2\text{-}CH_2\text{-}OH \quad (2.4h)$$

$$---- CH_2\text{-}CH_2\text{-}CH_2\text{-}CH_2\text{-}CH_2\text{-}CH_2\text{-}CH_2\text{-}CH_2\text{-}CH_2\text{-}OH \quad (2.4i)$$

$$---- CH_2\text{-}CH_2\text{-}CH_2\text{-}CH_2\text{-}CH_2\text{-}CH_2\text{-}CH_2\text{-}CH_2\text{-}CH_2\text{-}CH_2\text{-}OH \quad (2.4j)$$

$$----CH_2\text{-}CH_2\text{-}CH_2\text{-}CH_2\text{-}CH_2\text{-}CH_2\text{-}CH_2\text{-}CH_2\text{-}CH_2\text{-}CH_2\text{-}CH_2\text{-}OH \quad (2.4k)$$

Herein, a broken line donates a valence bond.

In formula (3), $R^2$ is each independently hydrogen or a group selected from a monovalent hydrocarbon group of 1 to 5 carbon atoms and an alkoxy group of 1 to 5 carbon atoms.

The monovalent hydrocarbon group of 1 to 5 carbon atoms represented by $R^2$ may be either linear or branched, and examples of which include groups similar to the linear or branched groups of 1 to 5 carbon atoms as exemplified for $R^1$. Of these, methyl, isopropyl, and t-butyl are preferable.

As the alkoxy group of 1 to 5 carbon atoms represented by $R^2$, those having 1 to 3 carbon atoms are preferable, and examples of which include methoxy, ethoxy, n-propoxy, isopropoxy, n-butoxy, and n-pentoxy. Of these, methoxy and ethoxy are preferable.

$R^3$ is hydrogen or methyl.

The subscript s is an integer of 0 to 4, preferably an integer of 0 to 2.

The subscript t is an integer of 2 to 4, preferably 2 or 3.

The subscript u is a number of 1 to 3, and a repeat unit in parentheses with u may be a chemically single repeat unit or a combination of different repeat units, and an average value thereof may be a number of 1 to 3. When u is 0, the group has a phenolic hydroxy group, which leads to a reduced reactivity to an isocyanate group, for example. Thus, u is defined as the number of 1 or more. When the different repeat units are combined, a case where u is 0 is not included. In addition, when u is more than 3, heat resistance is lowered, thus a case where u is more than 3 is not included. Therefore, u is the number of 1 to 3. The repeat unit in parentheses with u is even preferably a chemically single repeating unit.

Examples of the group having the formula (3) include those having the following formulae, but not limited thereto.

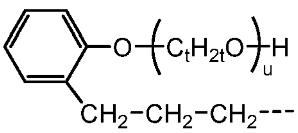

(3.1a)

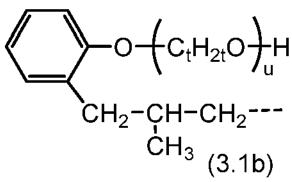

(3.1b)

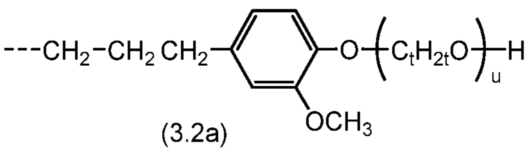

(3.2a)

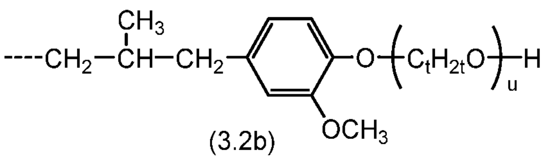

(3.2b)

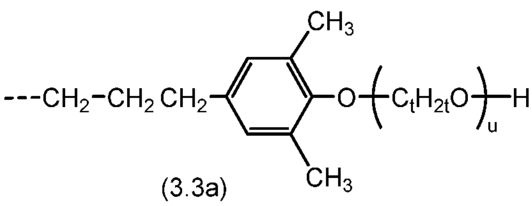

(3.3a)

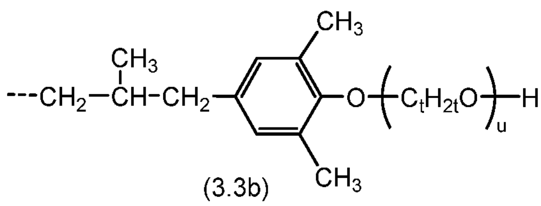

(3.3b)

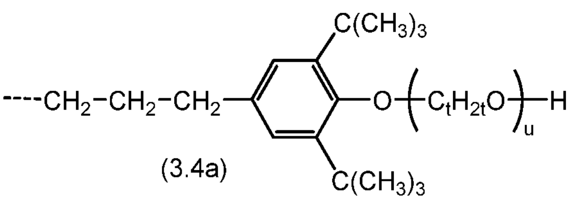

(3.4a)

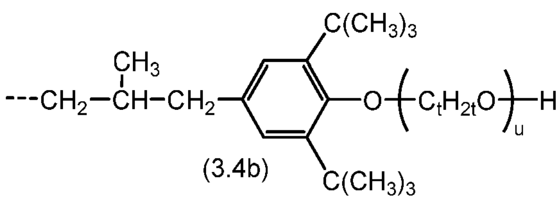

(3.4b)

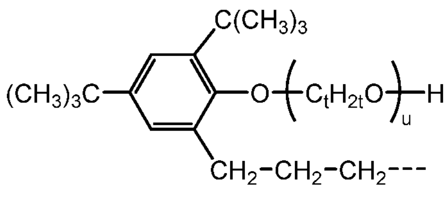

(3.4c)

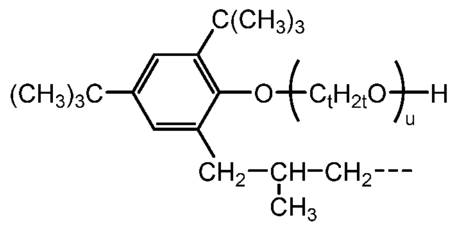

(3.4d)

Herein, t and u are the same as defined above. A broken line donates a valence bond.

Of these, those having the following formulae (3.1a), (3.2a), and (3.3a) are preferable.

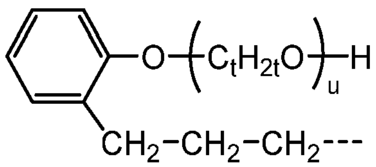

(3.1a)

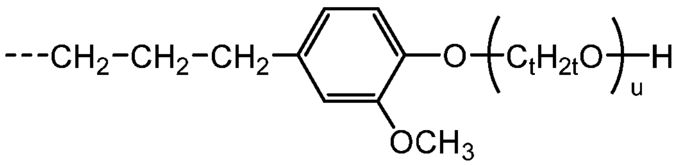

(3.2a)

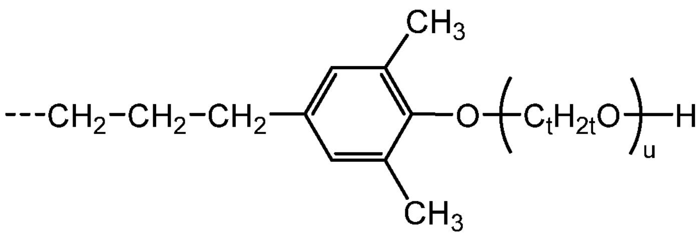

(3.3a)

Herein, t and u are the same as defined above. A broken line donates a valence bond.

Examples of the groups having the formulae (3.1a), (3.2a), and (3.3a) include groups having the following formulae, but not limited thereto. Of these, the groups having the formulae (3.1a)-1, (3.2a)-1 to (3.2a)-5, and (3.3a)-1 are preferable.

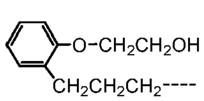

(3.1a)-1

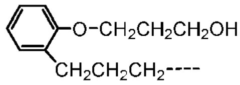

(3.1a)-2

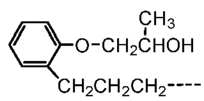

(3.1a)-3

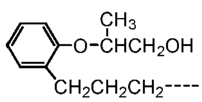

(3.1a)-4

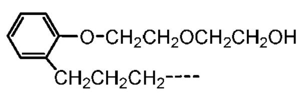

(3.1a)-5

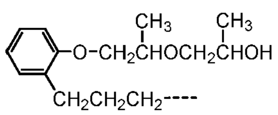

(3.1a)-6

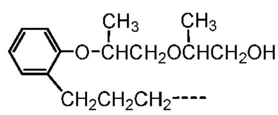

(3.1a)-7

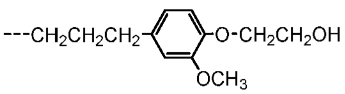
(3.2a)-1

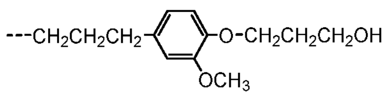
(3.2a)-2

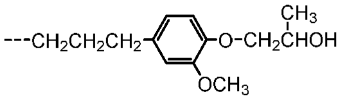
(3.2a)-3

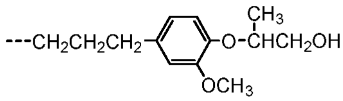
(3.2a)-4

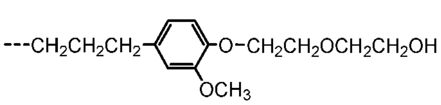
(3.2a)-5

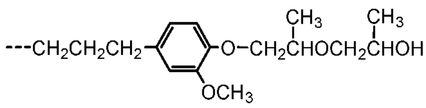
(3.2a)-6

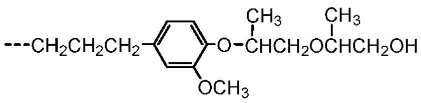
(3.2a)-7

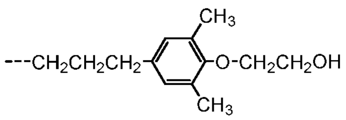
(3.3a)-1

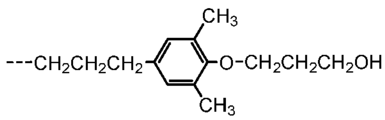
(3.3a)-2

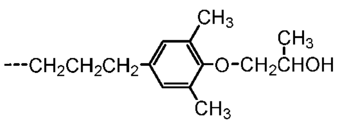
(3.3a)-3

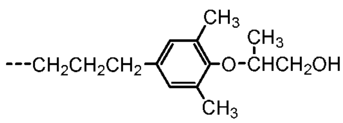
(3.3a)-4

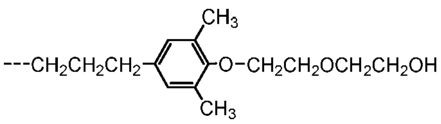
(3.3a)-5

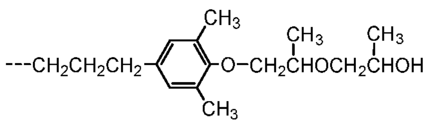
(3.3a)-6

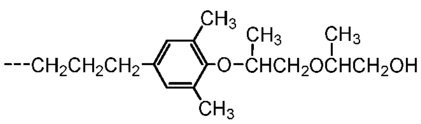
(3.3a)-7

Herein, a broken line donates a valence bond.

In formula (1), k, p, q, and r are integers of $k > 0$, integers of $p \geq 0$, integers of $q \geq 0$, and integers of $r \geq 0$, provided that the sum k+p+q is an integer of $k+p+q \geq 2$.

The subscript k is preferably an integer of 2 to 5, more preferably an integer of 2 to 4.

The subscript p is preferably an integer of 2 to 100, more preferably an integer of 5 to 80.

The subscript q is preferably an integer of 0 to 3, more preferably an integer of 0 to 2, and even more preferably 1 or 2.

The subscript r is preferably an integer of 0 to 3, more preferably 0 or 1, and even more preferably 0.

The sum k+p+q is preferably an integer of $k+p+q \geq 5$, more preferably an integer of $k+p+q \geq 8$.

The arrangement of the siloxane units in parentheses is not particularly limited, and the siloxane units may be randomly bonded or may form a block structure.

The hydroxyl group-containing organosilicon compound used in the invention preferably has a structure of formula (1) wherein k is an integer of 2 to 5, p is an integer of 2 to 100, q is an integer of 0 to 3, r is 0, and two of all $R^1$ groups are groups having the formula (3). Notably, a hydroxyl group-containing organosilicon compound which contains three or more groups having the formula (3) of all $R^1$ groups may be used as long as the solubility of the siloxane-modified polyurethane resin in a volatile organic solvent is not impaired.

Particularly preferable examples of the hydroxyl group-containing organosilicon compound include those having two of all $R^1$ groups which have the above formula (3) attached only to the terminal of the molecular chain.

<u>(1-2) Properties of component (a)</u>

The hydroxyl group-containing organosilicon compound used in the invention preferably has a weight average molecular weight of 400 to 15,000, more preferably 600 to 10,000, even more preferably 600 to 8,000, and still more preferably 600 to 6,000. Notably, the weight-average molecular weight is a polystyrene equivalent value obtained by gel permeation chromatography (GPC) under the following conditions.

[Measurement conditions]

| | |
|---|---|
| Developing solvent: | Tetrahydrofuran (THF) |
| Flow rate: | 0.6 mL/min |
| Detector: | Differential refractive index detector (RI) |
| Column: | TSK Guard column SuperH-H |
| | TSKgel SuperHM-N (6.0 mm I.D. × 15 cm × 1) |
| | TSKgel SuperH2500 (6.0 mm I.D. × 15 cm × 1) (all manufactured by Tosoh Corporation) |
| Column temperature: | 40°C |
| Sample injection amount: | 50 μL (THF solution having a concentration of 0.3% by weight) |

The hydroxyl group-containing organosilicon compound used in the invention preferably has a kinematic viscosity of 10 to 10,000 $mm^2/s$, and more preferably 20 to 5,000 $mm^2/s$. Notably, the kinematic viscosity is measured at 25°C by using a Cannon-Fenske viscometer described in JIS Z 8803: 2011.

The average molecular weight determined from the hydroxyl value according to JIS K 0070: 1992 is preferably 400 to 15,000, more preferably 600 to 10,000, even more preferably 600 to 8,000, and still more preferably 600 to 6,000.

<u>(1-3) Method for preparing component (a)</u>

The hydroxyl group-containing organosilicon compound used in the invention can be obtained by, for example, hydrosilylating an organohydrogenpolysiloxane having the following formula (4) and a compound having a hydroxyl group and an aliphatic unsaturated group of the following general formula (5) or (6).

$$(R^5{}_3SiO_{1/2})k(R^5{}_2SiO_{2/2})_p(R^5SiO_{3/2})q(SiO_{4/2})_r \qquad (4)$$

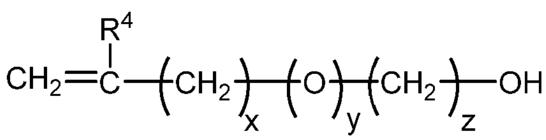

(5)

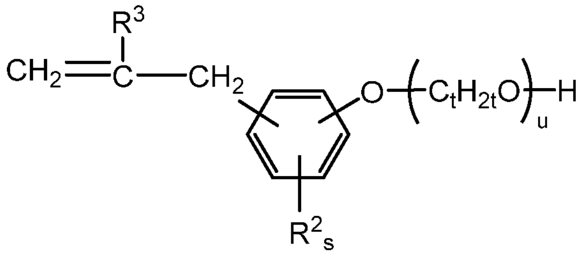

(6)

As the organohydrogenpolysiloxane, one having the following formula (4) can be used.

$$(R^5{}_3SiO_{1/2})_k(R^5{}_2SiO_{2/2})_p(R^5SiO_{3/2})_q(SiO_{4/2})_r \qquad (4)$$

In formula (4), $R^5$ is each independently hydrogen or a monovalent hydrocarbon group of 1 to 10 carbon atoms with the proviso that two of all $R^5$ groups are hydrogen.

Examples of the monovalent hydrocarbon group represented by $R^5$ are as exemplified for $R^1$, and of these, methyl, ethyl, and phenyl are preferable.

The subscript k, p, q, and r are the same as defined above.

The arrangement of the siloxane units in parentheses is not particularly limited, and the siloxane units may be randomly bonded or may form a block structure.

The organohydrogenpolysiloxane used herein preferably has a structure of formula (4) wherein k is an integer of 2 to 5, p is an integer of 2 to 100, q is an integer of 0 to 3, r is 0, and two of all $R^5$ groups are preferably hydrogen. Particularly preferable examples of the organohydrogenpolysiloxane include those having two hydrogen attached only to the terminal of the molecular chain.

Notably, an organohydrogenpolysiloxane containing three or more hydrogen may be used as long as the solubility of the siloxane-modified polyurethane resin to be obtained in a volatile organic solvent is not impaired.

Examples of the organohydrogenpolysiloxane having the formula (4) include: 1,1,3,3-tetramethyldisiloxane; dimethylpolysiloxane capped at both molecular chain terminals with dimethylhydrogensiloxy groups; dimethylsiloxane-diphenylsiloxane copolymer capped at both molecular chain terminals with dimethylhydrogensiloxy groups; methylhydrogenpolysiloxane capped at one molecular chain terminal with dimethylhydrogensiloxy group; methylhydrogensiloxane-dimethylsiloxane copolymer capped at one molecular chain terminal with dimethylhydrogensiloxy group; methylhydrogensiloxane-diphenylsiloxane copolymer capped at one molecular chain terminal with dimethylhydrogensiloxy group; methylhydrogensiloxane-dimethylsiloxane-diphenylsiloxane copolymer capped at one molecular chain terminal with dimethylhydrogensiloxy group; copolymer comprising $(CH_3)_3SiO_{1/2}$ units, $(CH_3)_2HSiO_{1/2}$ units, $(CH_3)_2SiO$ units, and $CH_3SiO_{3/2}$ units; copolymer comprising $(CH_3)_2HSiO_{1/2}$ units, $(CH_3)_2SiO$ units, and $CH_3SiO_{3/2}$ units; copolymer comprising $(CH_3)_2HSiO_{1/2}$ units, $(C_6H_5)_2SiO$ units, $(CH_3)_2SiO$ units, and $CH_3SiO_{3/2}$ units; copolymer comprising $(CH_3)(C_6H_5)HSiO_{1/2}$ units, $(CH_3)_2SiO$ units, and $CH_3SiO_{3/2}$ units; and copolymer comprising $(CH_3)_2HSiO_{1/2}$, $(CH_3)_2SiO$ units, and $C_6H_5SiO_{3/2}$ units. These may be used alone or in combination of two or more.

The compound having a hydroxyl group and an aliphatic unsaturated group may have the following formula (5) or (6).

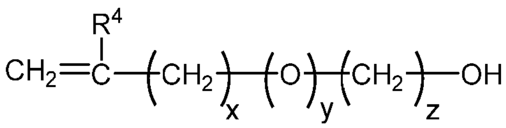

(5)

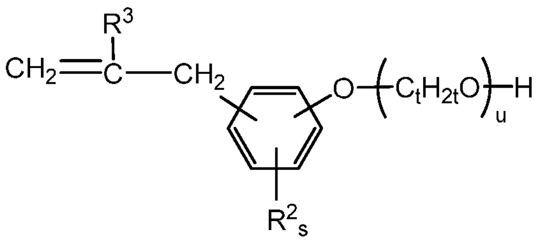

(6)

In formula (5), $R^4$, x, y, and z are the same as defined above. In formula (6), $R^2$, $R^3$, s, t, and u are the same as defined above.

Examples of the group having the formula (5) include those having the following formulae, but not limited thereto.

Of these, the groups having the formulae (5.2b), (5.4f), (5.4h), and (5.4k) are preferable.

$CH_2=CH-O-CH_2-CH_2-OH$ (5.1a)

$CH_2=CH-O-CH_2-CH_2-CH_2-OH$ (5.1b)

$CH_2=CH-O-CH_2-CH_2-CH_2-CH_2-OH$ (5.1c)

$CH_2=CH-CH_2-O-CH_2-OH$ (5.2a)

$CH_2=CH-CH_2-O-CH_2-CH_2-OH$ (5.2b)

$CH_2=CH-CH_2-O-CH_2-CH_2-CH_2-OH$ (5.2c)

$CH_2=CH-CH_2-O-CH_2-CH_2-CH_2-CH_2-OH$ (5.2d)

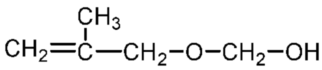
(5.2e)

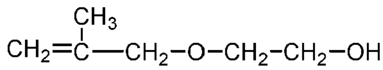
(5.2f)

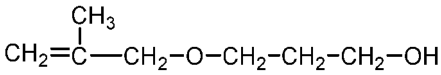
(5.2g)

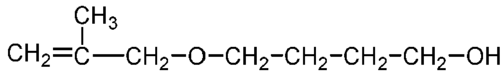
(5.2h)

$CH_2=CH-CH_2-CH_2-O-CH_2-OH$ (5.3a)

$CH_2=CH-CH_2-CH_2-O-CH_2-CH_2-OH$ (5.3b)

$CH_2=CH-CH_2-CH_2-O-CH_2-CH_2-CH_2-OH$ (5.3c)

$CH_2=CH-CH_2-CH_2-O-CH_2-CH_2-CH_2-CH_2-OH$ (5.3d)

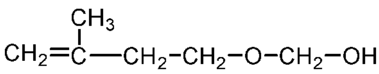
(5.3e)

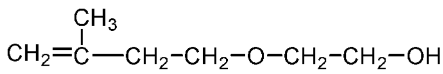
(5.3f)

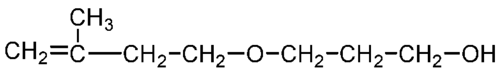
(5.3g)

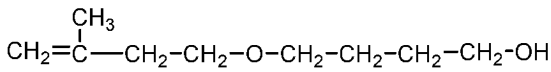
(5.3h)

$CH_2=CH-CH_2-OH$ (5.4a)

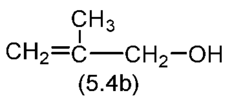
(5.4b)

$CH_2=CH-CH_2-CH_2-OH$ (5.4c)

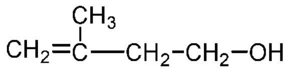

(5.4d)

$CH_2=CH-CH_2-CH_2-CH_2-OH$ (5.4e)

$CH_2=CH-CH_2-CH_2-CH_2-CH_2-OH$ (5.4f)

$CH_2=CH-CH_2-CH_2-CH_2-CH_2-CH_2-OH$ (5.4g)

$CH_2=CH-CH_2-CH_2-CH_2-CH_2-CH_2-CH_2-OH$ (5.4h)

$CH_2=CH-CH_2-CH_2-CH_2-CH_2-CH_2-CH_2-CH_2-OH$ (5.4i)

$CH_2=CH-CH_2-CH_2-CH_2-CH_2-CH_2-CH_2-CH_2-CH_2-OH$ (5.4j)

$CH_2=CH-CH_2-CH_2-CH_2-CH_2-CH_2-CH_2-CH_2-CH_2-CH_2-OH$ (5.4k)

Examples of the group having the formula (6) include those having the following formulae, but not limited thereto.

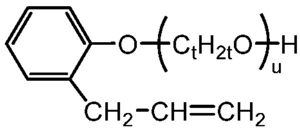

(6.1a)

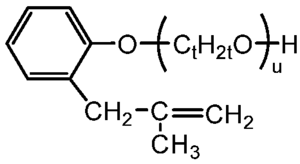

(6.1b)

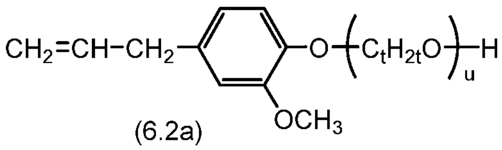

(6.2a)

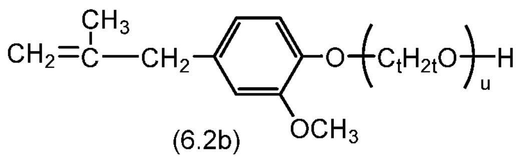

(6.2b)

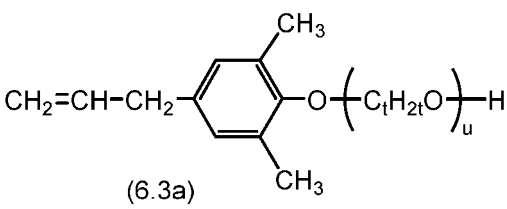

(6.3a)

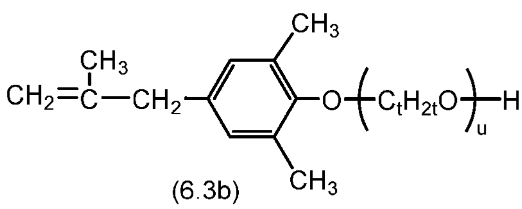

(6.3b)

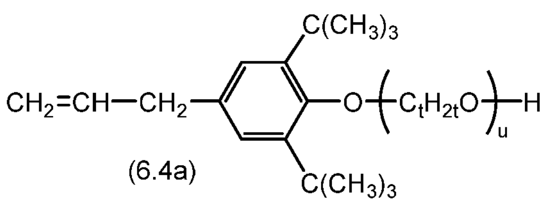

(6.4a)

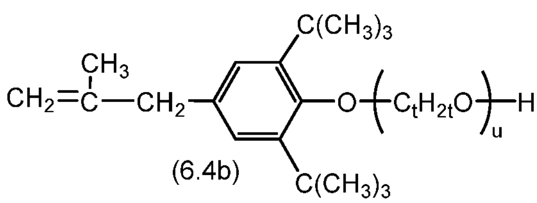

(6.4b)

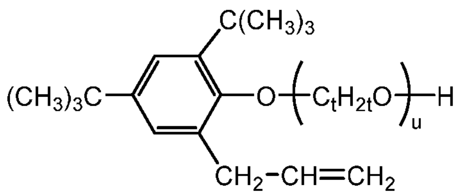

(6.4c)

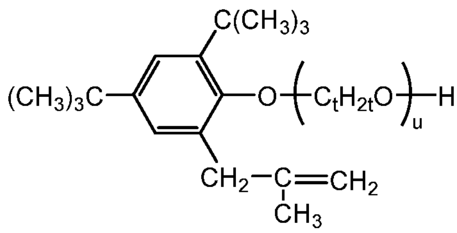

(6.4d)

Herein, t and u are the same as defined above.

Of these, those having the following formulae (6.1a), (6.2a), and (6.3a) are preferable.

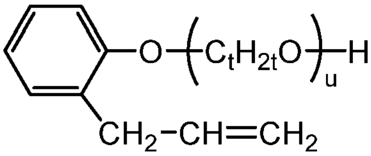

(6.1a)

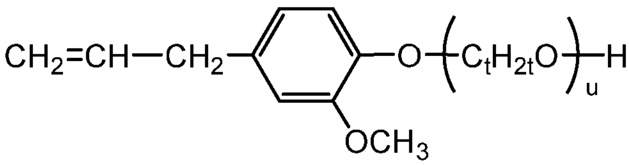

(6.2a)

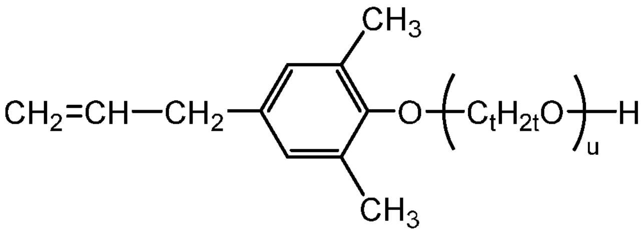

(6.3a)

Herein, t and u are the same as defined above.

Examples of the groups having the formulae (6.1a), (6.2a), and (6.3a) include groups having the following formulae, but not limited thereto. Of these, the groups having the formulae (6.1a)-1, (6.2a)-1 to (6.2a)-5, and (6.3a)-1 are preferable.

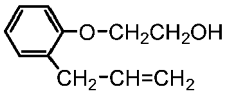

(6.1a)-1

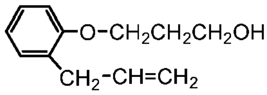

(6.1a)-2

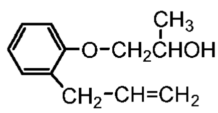

(6.1a)-3

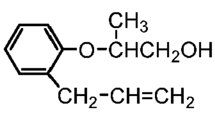

(6.1a)-4

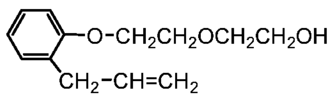

(6.1a)-5

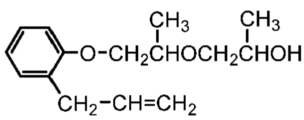

(6.1a)-6

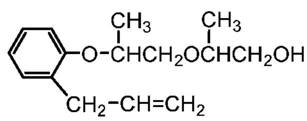

(6.1a)-7

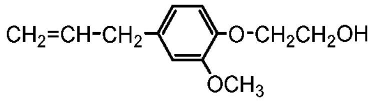
(6.2a)-1

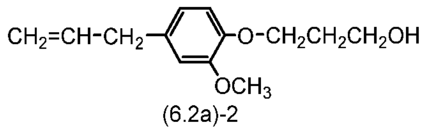
(6.2a)-2

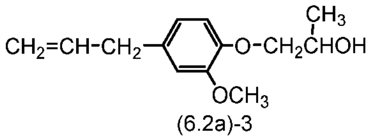
(6.2a)-3

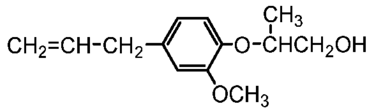
(6.2a)-4

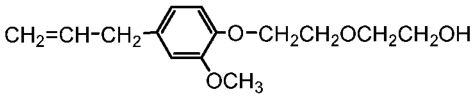
(6.2a)-5

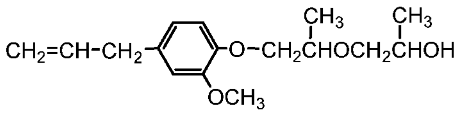
(6.2a)-6

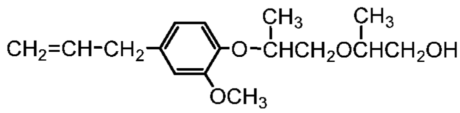
(6.2a)-7

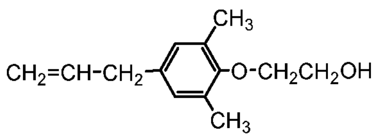
(6.3a)-1

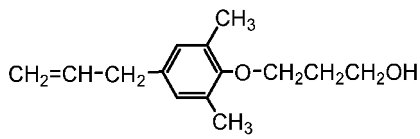
(6.3a)-2

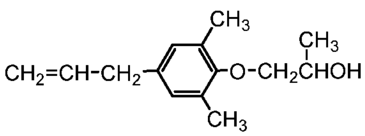
(6.3a)-3

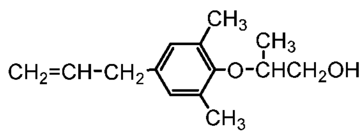
(6.3a)-4

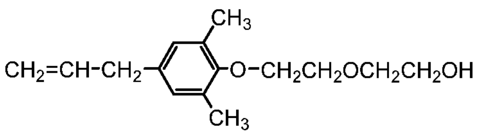
(6.3a)-5

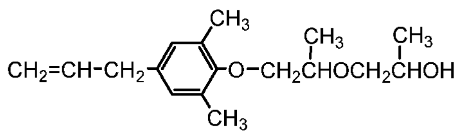
(6.3a)-6

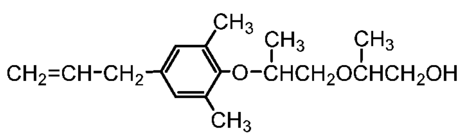
(6.3a)-7

The compound having a hydroxyl group and an aliphatic unsaturated group of the formula (6) can be obtained, for example, by the following method.

When a phenol compound having an allyl group in the molecule such as orthoallylphenol or eugenol (2-methoxy-4-allylphenol), which is easily available as a commercial product, is used as a starting material, the compound can be obtained by subjecting a phenolic hydroxyl group to an addition reaction with a predetermined amount of any of ethylene oxide, propylene oxide, butylene oxide, tetrahydrofuran, or the like, or a mixture thereof, by a prior art well-known method.

**In** addition, for example, when a phenol compound such as phenol, 2,6-dimethylphenol, 2,4-di-t-butylphenol, or 2,6-di-t-butylphenol is used as a starting material, first, an allyl halide compound such as allyl bromide, allyl chloride, or

methallyl chloride is reacted with these phenol compounds under basic conditions by a prior art well-known method to obtain allyl (or methallyl) phenyl ether.

Subsequently, a thermal rearrangement reaction of the allyl group is carried out to obtain an allylated (or methallylated) phenol, and this is subjected to an addition reaction with a predetermined amount of any of ethylene oxide, propylene oxide, butylene oxide, tetrahydrofuran, and the like, or a mixture thereof to obtain the compound in the same manner as described above.

The thermal rearrangement reaction of the allyl group occurs at an ortho or para position, so in order to obtain a high-purity product, it is thus more preferable to use a compound having a vacant position in only one of the ortho and para, such as 2,6-dimethylphenol, 2,4-di-t-butylphenol, or 2,6-di-t-butylphenol.

In the reaction between the organohydrogenpolysiloxane of the above formula (4) and the compound having a hydroxyl group and an aliphatic unsaturated group of the above formula (5) or (6), although the amount of the compound having a hydroxyl group and an aliphatic unsaturated group to be subjected to the reaction is not particularly limited, it is preferably an amount ratio in which the number of moles of the aliphatic unsaturated group (allyl or methallyl) of the compound having a hydroxyl group and an aliphatic unsaturated group is excessive per the number of moles of the hydrosilyl group of the organohydrogenpolysiloxane.

For example, the amount ratio of the number of moles of the aliphatic unsaturated group per one mole of the hydrosilyl group is preferably 1 to 5 mole, more preferably 1 to 2 mole, and even more preferably 1 to 1.5 mole. If the amount ratio is less than 1 mole, the amount of the aliphatic unsaturated group is insufficient, and dehydrogenation may be likely to occur. On the other hand, if the amount ratio is more than 5 mole, a large amount of unreacted substances of the compound having a hydroxyl group and an aliphatic unsaturated group remains in the reaction system, which may be uneconomical.

The hydrosilylation reaction between the organohydrogenpolysiloxane of formula (4) and the compound having a hydroxyl group and an aliphatic unsaturated group of formula (5) or (6) is preferably carried out in the presence of a catalyst. The catalyst is not particularly limited, and a conventionally well-known addition reaction catalyst can be used.

Examples of the catalyst include platinum group elemental metals such as platinum (including platinum black), palladium, rhodium, and ruthenium, and metal catalysts containing these platinum group metals, gold, nickel, cobalt, and the like. Of these, a metal catalyst having platinum, palladium, or rhodium is preferable.

Examples of the catalyst having platinum, palladium, or rhodium include $PtCl_4$, $H_2PtCl_6H_2O$, a Pt-ether complex, a Pt-olefin complex, $PdCl_2(PPh_3)_2$, $PdCl_2(PhCN)_2$, $RhCl_2(PPh_3)_3$ (in the above formula, Ph is a phenyl group), and a complex of platinum chloride, chloroplatinic acid, or chloroplatinate and a vinyl group-containing siloxane. These catalysts may be used alone or in admixture of two or more.

Of these, a metal catalyst having platinum is more preferable, and a Karstedt catalyst (complex of 1,1,3,3-tetramethyl-1,3-divinyldisiloxane and a sodium bicarbonate neutralized product of chloroplatinic acid) is even more preferable.

These catalysts can be used after being diluted with a solvent such as alcohols, aromatics, hydrocarbons, or ketones as necessary.

The amount of the catalyst is not particularly limited as long as it is the catalytic amount. The catalytic amount herein means a sufficient amount to allow the addition reaction to proceed, and for example, preferably 0.02 parts by weight or less, more preferably 0.00001 to 0.02 parts by weight, even more preferably 0.0001 to 0.01 parts by weight, and still more preferably 0.0003 to 0.005 parts by weight in terms of the main metal atom amount of the metal catalyst per 100 parts by weight of the organohydrogenpolysiloxane.

The entire amount of the catalyst may be added from the beginning of the reaction, or the catalyst may be added several times during the reaction. The reaction can be sufficiently carried out even with a low amount of the catalyst. However, if the amount of the catalyst is too small, the reaction rate may be too slow, and therefore the amount of the catalyst is preferably equal to or more than the lower limit. Also, if the amount of the catalyst is too large, the reaction rate is not particularly improved, which may be uneconomical.

A large amount of the remaining metal catalyst in the hydroxyl group-containing organosilicon compound (hydroxy group-containing siloxane) to be obtained as component (a) can cause coloring. Therefore, the remaining metal catalyst amount is preferably small. In the preparation method in the invention, the amount of the metal catalyst contained in the hydroxy group-containing siloxane to be obtained can be preferably 0.02 parts by weight or less, more preferably 0.01 parts by weight or less, and even more preferably 0.005 parts by weight or less in terms of a conversion amount of main metal atoms per 100 parts by weight of the siloxane.

After completion of the addition reaction, the remaining metal catalyst may be adsorbed and removed by activated carbon or the like.

In the hydrosilylation reaction between the organohydrogenpolysiloxane and the compound having a hydroxyl group and an aliphatic unsaturated group in the invention, a solvent may be used as necessary.

Examples of the solvent include alcohols such as ethanol and 2-propanol; aromatic hydrocarbons such as toluene, xylene, and benzene; aliphatic hydrocarbons such as hexane, cyclohexane, methylcyclohexane, and ethylcyclohexane; halogenated hydrocarbons such as chloroform, dichloromethane, and carbon tetrachloride; ethers such as

tetrahydrofuran (THF) and diethyl ether; ketones such as acetone and methyl ethyl ketone; dimethylformamide (DMF); and acetonitrile.

The reaction temperature of the hydrosilylation is preferably 20 to 200°C, more preferably 40 to 180°C, and even more preferably 60 to 150°C. The reaction time is preferably within 20 hours, more preferably within 12 hours, and even more preferably within 8 hours.

(2) Component (b)

Component (b) is a diisocyanate compound having two isocyanate groups per molecule. Component (b) is not particularly limited as long as it has two isocyanate groups per molecule, and examples of which include those having the following formula (7).

OCN-Q-NCO (7)

Herein, Q is a divalent hydrocarbon group of 1 to 20 carbon atoms.

Examples of the divalent hydrocarbon group of Q include a linear or branched alkylene group of preferably 1 to 15 carbon atoms, more preferably 1 to 10 carbon atoms, and even more preferably 1 to 8 carbon atoms; a cycloalkylene group of preferably 3 to 10 carbon atoms, and more preferably 3 to 6 carbon atoms; an alkylene group containing an alicyclic structure having preferably 4 to 15 carbon atoms and more preferably 4 to 13 carbon atoms; an arylene group of preferably 6 to 15 carbon atoms and more preferably 6 to 10 carbon atoms; an aralkylene group of preferably 7 to 15 carbon atoms and more preferably 7 to 13 carbon atoms; and a group obtained by combining these groups.

Of these, Q is preferably a linear or branched alkylene group, an alkylene group having an alicyclic structure, or an aralkylene group, and more preferably a linear or branched alkylene or alkylene group having an alicyclic structure.

Examples of the alkylene group include methylene, ethylene, trimethylene, propylene, tetramethylene, pentamethylene, hexamethylene, heptamethylene, octamethylene, nonamethylene, decamethylene, dodecamethylene, and tetradecamethylene.

Examples of the cycloalkylene group include cyclopentylene and cyclohexylene.

The alkylene group having an alicyclic structure is preferably an alkylene group having a saturated alicyclic structure, and examples of which include methylenecyclohexylene, methylenebiscyclohexylene, (1,3-cyclohexanediyl)bismethylene, and (1,4-cyclohexanediyl)bismethylene.

Examples of the arylene group include phenylene and naphthylene.

Examples of the aralkylene group include methylenephenylene and methylenebisphenylene.

Also included are the foregoing groups in which some or all hydrogen is substituted by other substituents, and examples of other substituents include alkyl groups of 1 to 3 carbon atoms such as methyl and ethyl; alkoxy groups of 1 to 3 carbon atoms such as methoxy and ethoxy; halogen atoms such as chlorine and bromine; and carboxy groups.

Examples of the diisocyanate compound having the formula (7) include diisocyanate compounds such as 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethyl xylylene diisocyanate, hydrogenated xylylene diisocyanate, lysine diisocyanate, isophorone diisocyanate, 4,4'-dicyclohexylmethane diisocyanate, 3,3'-dimethyl-4,4'-dicyclohexylmethane diisocyanate, cyclohexane-1,3-diylbis(methylene)diisocyanate, and cyclohexane-1,4-diylbis(methylene)diisocyanate.

Component (b) may be used alone or in combination of two or more. Notably, a compound having three or more isocyanate groups per molecule may be contained as long as the solubility of the resin to be obtained in a volatile organic solvent is not impaired.

Of these, preferable examples are 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 1,6-hexamethylene diisocyanate, xylylene diisocyanate, isophorone diisocyanate, 4,4'-dicyclohexylmethane diisocyanate, cyclohexane-1,4-diylbis(methylene) diisocyanate, and more preferable examples are 1,6-hexamethylene diisocyanate, isophorone diisocyanate, 4,4'-dicyclohexylmethane diisocyanate, and cyclohexane-1,4-diylbis(methylene)diisocyanate.

Although the amount of component (b) added is not particularly limited, it is preferably 1 to 50 parts by weight per 100 parts by weight of component (a).

(3) Component (c)

Component (c) is an organic compound having two or more functional groups per molecule capable of reacting with an isocyanate group. Examples of the functional group capable of reacting with an isocyanate group include hydroxyl, amino, carboxy, and mercapto. Component (c) is not particularly limited as long as it has two or more functional groups per molecule, but compounds having hydroxyl or amino group are preferable.

Examples of component (c) include polyols (diols) such as ethylene glycol, 1,2-propanediol, 1,3-propanediol, 1,4-butanediol, 1,3-butanediol, 1,2-butanediol, 2,3-butanediol, 1,5-pentanediol, 1,4-pentanediol, 1,3-pentanediol, 1,2-pentanediol, 2,5-pentanediol, 2,4-pentanediol, 2,3-pentanediol, 1,6-hexanediol, 1,5-hexanediol, 1,4-hexanediol, 1,3-hexanediol, 1,2-hexanediol, 2,6-hexanediol, 2,5-hexanediol, 2,4-hexanediol, 2,3-hexanediol, 1,4-cyclohexanediol, 1,4-cyclohexanedimethanol (1,4-dihydroxymethylcyclohexane), 1,8-octanediol, 1,9-nonanediol, 1,10-decanediol, neopentyl glycol, and methylpentanediol.

Notably, unlike component (a), polyol described herein is one having a low molecular weight and being free of silicon atom, and it is preferably one having a weight average molecular weight of less than 400.

Further, examples of which include trifunctional alcohols such as glycerin and trimethylolpropane; tetrafunctional alcohols such as pentaerythritol and $\alpha$-methylglycoside; hexafunctional alcohols such as sorbitol and sucrose; alkanolamines such as monoethanolamine, diethanolamine, and triethanolamine; and diamines such as ethylenediamine, diaminotoluene, diphenylmethanediamine, 4,4'-diaminodiphenylmethane, 3,3'-dichloro-4,4'-diaminodiphenylmethane, 4,4'-methylenebis(2,6-diethylaniline), 4,4'-methylenebis(2-ethyl-6-methylaniline), diethylmethylbenzenediamine, 4,6-diethyl-2-methyl-1,3-phenylenediamine, 2-methyl-4,6-bis(methylthio)-1,3-benzenediamine, 4-methyl-2,6-bis(methylthio)-1,3-benzenediamine, bis(4-amino-2,3-dichlorophenyl)methane (TCDAM), trimethylenebis(4-aminobenzoate), and isophoronediamine.

Also included are organopolysiloxanes having amino groups at both ends of the molecular chain such as dimethylpolysiloxane having amino groups at both ends of the molecular chain.

These may be used alone or in combination of two or more.

Of these, 1,4-butanediol, 1,9-nonanediol, 1,4-dihydroxymethylcyclohexane, 4,4'-diaminodiphenylmethane, and isophoronediamine are preferable.

Notably, a compound having three or more functional group per molecule capable of reacting with an isocyanate group may be contained as long as the solubility of the resin to be obtained in a volatile organic solvent is not impaired.

Although the amount of component (c) added is not particularly limited, it is preferably 0.1 to 10 parts by weight per 100 parts by weight of component (a).

The amounts of components (a) to (c) contained in the siloxane-modified polyurethane resin composition are m mole of the organic compound as component (c) and (1+m) $\times$ (0.9 to 1.2) mole of the diisocyanate compound as component (b) each per one mole of the hydroxyl group-containing organosilicon compound as component (a).

If the molar ratio of component (b) is less than (1+m) $\times$ 0.9 mole, the molecular weight of the siloxane-modified polyurethane resin decreases, and strength and elongation of the resin become insufficient. If the molar ratio is more than (1+m) $\times$ 1.2 mole, the residual amount of unreacted isocyanate groups increases. The molar ratio is preferably (1+m) $\times$ (0.95 to 1.1) mole, more preferably (1+m) $\times$ (0.98 to 1.05) mole, and even more preferably (1+m) $\times$ (1 to 1.05) mole.

Typically, in order to enhance the solubility of the resin to be obtained in an organic solvent, it is considered that it is better to increase the ratio of the hydroxyl group-containing organosilicon compound of component (a) to the total amount of components (a) to (c) contained in the siloxane-modified polyurethane resin composition. However, in the invention, it has been found that when the molar ratio (m) of the organic compound as component (c), not the ratio of component (a), is 0.2 mole or more and less than 1.6 moles, the resin becomes soluble in the organic solvent. The molar ratio is preferably 1.5 or less, and more preferably 1.4 or less.

The strength and elongation of the siloxane-modified polyurethane resin decrease as m decreases, and thus the lower limit of m is preferably 0.4 mole or more, and more preferably 0.5 mole or more.

(4) (d) Urethane curing catalyst

The siloxane-modified polyurethane resin composition used in the invention preferably further contains (d) a urethane curing catalyst in addition to components (a) to (c).

Component (d) accelerates the reaction between the isocyanate group of component (b) and the hydroxyl group of component (a) and the isocyanate-reactive group of component (c).

Examples of the urethane curing catalyst include amine compounds such as triethylamine, N,N-dimethylcyclohexylamine, N,N,N',N'-tetramethylethylenediamine, N,N,N', N'-tetramethylhexamethylenediamine, N,N,N',N",N"-pentamethyldiethylenetriamine, N,N,N',N",N"-pentamethyldipropylene triamine, triethylenediamine, N-methyl-N'-(2-dimethylaminoethyl)piperazine, N-ethylmorpholine, 1,2-dimethylimidazole, dimethylethanolamine, dimethylaminoethoxyethanol, N,N,N'-trimethylaminoethylethanolamine, N-methyl-N'-(2-hydroxyethyl)piperazine, bis(2-dimethylaminoethyl)ether; organic titanium compounds such as tetraisopropoxytitanium, tetra-n-butoxytitanium, tetra-t-butoxytitanium, a titanium diisopropoxybisacetylacetone complex; titanium tetra-2-ethylhexoxide, titanium diisopropoxybis(ethylacetoacetate); organic zirconium compounds such as zirconium tetrabutoxide, zirconium tetrapropoxide, tetrakis(2,4-pentanedionato)zirconium, zirconium dibutoxybis(ethylacetoacetate); and organic tin compounds such as dibutyltin diacetate and dibutyltin dilaurate.

Of these, an organic zirconium compound is preferable, and tetrakis(2,4-pentanedionato)zirconium is more preferable.

When component (d) is blended, although the amount added is not particularly limited and it can be typically within the range applied to the preparation of the polyurethane resin, it is preferably 1 to 1,000 ppm, and more preferably 10 to 500 ppm, per the total weight of components (a) to (c).

(5) Other components

In the siloxane-modified polyurethane resin composition of the invention, other components can be blended in addition to components (a) to (c) and optional component (d) as long as the advantageous effects of the invention are not impaired. Examples of other components include a polyol other than component (c), antioxidant, ultraviolet absorber, and light stabilizer.

Examples of polyol include, for example, a hydroxyl group-containing polymer component and examples of which include polyether polyol, polyester polyol, and polycarbonate polyol. Examples of which include polyethylene glycol, polypropylene glycol, polyethylene glycol-polytetramethylene glycol, polytetramethylene ether glycol, polytetramethylene glycol, and polyhexamethylene glycol, which are obtained by polymerizing or copolymerizing alkylene oxide or cyclic ether. Notably, unlike component (a), the polyol referred to herein is free of a silicon atom, and unlike a polyol exemplified in component (c), preferably has a weight average molecular weight of 400 to 15,000.

Examples of antioxidant include hindered phenol-type antioxidants, amine-type antioxidants, phosphorus-type antioxidants, and sulfur-type antioxidants.

Examples of ultraviolet absorber include benzotriazole-type ultraviolet absorbers, triazine-type ultraviolet absorbers, benzophenone-type ultraviolet absorbers, and benzoate-type ultraviolet absorbers.

Examples of light stabilizer include a hindered amine-type light stabilizer.

The siloxane-modified polyurethane resin composition containing the above components (a) to (c), optional component (d) and other components can be obtained by mixing the above components according to a conventional method. Other components can be added at any timing.

(6) Method for preparing component (A)

The method (synthesis method) for preparing (A) siloxane-modified polyurethane resin contained in the coating agent composition of the invention is not particularly limited, and a conventional method used for preparing a polyurethane resin can be employed, and examples of which include a prepolymer method and a one-shot method.

In the prepolymer method, first, components (a) and (b) are reacted. The reaction temperature is preferably 10 to 250°C, more preferably 20 to 150°C, and even more preferably 50 to 120°C. The reaction time is preferably 10 minutes to 10 hours, and more preferably 30 minutes to 5 hours. Thereafter, component (c) is further reacted. The reaction temperature and time are the same as described above.

The one-shot method is to react components (a), (b), and (c) simultaneously. The reaction temperature is preferably 10 to 250°C, more preferably 20 to 150°C, and even more preferably 50 to 120°C. The reaction time is preferably 10 minutes to 10 hours, and more preferably 30 minutes to 5 hours.

When (d) urethane curing catalyst as an optional component is added, the urethane curing catalyst is preferably added at the first stage of reacting components (a) and (b) in the case of the prepolymer method, whereas the urethane curing catalyst is preferably added when components (a), (b), and (c) are reacted simultaneously in the case of the one-shot method.

The siloxane-modified polyurethane resin composition is preferably one which can form a thermoplastic resin or elastomer by curing.

Although the weight average molecular weight of component (A) thus obtained is not particularly limited, it is preferably 50,000 to 500,000. Notably, the weight average molecular weight of component (A) is a polystyrene equivalent value obtained by GPC, and the measurement method is the same as described regarding component (a).

Although the amount of siloxane in component (A) is not particularly limited, it is preferably 65 to 98% by weight, and more preferably 70 to 97% by weight. It is noted that in the invention, the amount of siloxane in component (A) is defined as the content ratio of component (a) to the total weight of components (a) to (c) contained in the resin composition before curing.

Although tensile strength of component (A) is not particularly limited, it is preferably 0.1 to 30 MPa. Although

elongation at break is also not particularly limited, it is preferably 50 to 1000%.

Further, although gas permeability coefficient of component (A) is also not particularly limited, it is preferably 500 to 4,000 Barrer in the case of permeability coefficient of carbon dioxide.

Notably, the methods for measuring tensile strength, elongation at break, and gas permeability coefficient are described hereinbelow in Examples.

Component (B)

Component (B) is a volatile organic solvent having a boiling point of 180°C or less at 1 atm. Examples of component (B) include ketones such as acetone, methyl ethyl ketone, and methyl isobutyl ketone; ethers such as tetrahydrofuran and ethylene glycol dimethyl ether; amides such as dimethylformamide and dimethylacetamide; alcohols such as ethanol and 2-propanol; aromatic hydrocarbons such as toluene and xylene; aliphatic hydrocarbons such as cyclohexane and methylcyclohexane; halogenated hydrocarbons such as chloroform, dichloromethane, and carbon tetrachloride; esters such as ethyl acetate and butyl acetate; and nitriles such as acetonitrile.

Component (B) preferably contains one or more heteroatoms selected from oxygen, nitrogen, and halogen in the molecule. Component (B) more preferably contains oxygen atom in the molecule and has a boiling point of 120°C or less at 1 atm. It is even more preferably an ether such as tetrahydrofuran and ethylene glycol dimethyl ether, and still more preferably tetrahydrofuran.

The content of the volatile organic solvent of component (B) is 50 to 98% by weight of the entire coating agent composition. If the content is less than 50% by weight, the viscosity of the composition is too high. If the content is more than 98% by weight, it is not economical. The content is preferably 60 to 95% by weight, more preferably 70 to 95% by weight, even more preferably 80 to 95% by weight, and still more preferably 85 to 95% by weight.

In the coating agent composition of the invention, a prior art well-known additives such as antioxidant, ultraviolet absorber, and light stabilizer, which are typically used in the coating agent composition, can be blended as long as the advantageous effects of the invention are not impaired.

Method for preparing coating agent composition

The method for obtaining the coating agent composition of the invention containing the siloxane-modified polyurethane resin as component (A) and the volatile organic solvent as component (B) is not particularly limited, and examples of which include a method in which components (A) and (B) are mixed, and then the mixture is heated to a temperature equal to or less than the boiling point of component (B) to be dissolved. The heating conditions are, for example, preferably 40 to 100°C, more preferably 50 to 80°C and for preferably 0.5 to 10 hours, and more preferably 1 to 5 hours.

When component (A) is synthesized, component (B) can be blended and obtained as a solution, but in order to increase the molecular weight of the resin so that the resin exhibits original strength and elongation, it is preferable that components (a) to (c) are heated and cured to obtain a resin, and then (B) volatile organic solvent is added to dissolve the resin at a predetermined concentration.

Coating film or resin film

The siloxane-modified polyurethane resin coating agent composition of the invention can provide a thin film in a simple manner by drying and removing a volatile organic solvent, and can form a siloxane-modified polyurethane resin film excellent in gas permeability, strength, and elongation.

The substrate to which the coating agent composition of the invention is applied is not particularly limited, and examples of which include plastic molded products, wood products, ceramics, glass, and metals such as stainless steel, and composites thereof, and also include those in which the surface of these substrates is treated with polytetrafluoroethylene or the like.

The coating method of the coating agent composition of the invention may be appropriately selected from conventionally well-known methods, and for example, various coating methods such as bar coater, brush coating, spray, immersion, flow coating, roll coating, curtain coating, spin coating, and knife coating can be used.

After the coating, drying is carried out preferably at room temperature (25°C) to 100°C for about 10 minutes to 20 hours to remove the volatile organic solvent, thereby allowing to obtain a siloxane-modified polyurethane resin film. If the temperature is lower than room temperature, the drying time may be excessively long, and if the temperature is higher than 100°C, air bubbles may be easily generated.

Although thickness of the resulting film is not particularly limited, it may be appropriately selected depending on the intended use, and it is preferably 1 to 500 μm, and more preferably 10 to 200 μm.

Although tensile strength, elongation at break, and gas permeability coefficient of the siloxane-modified

polyurethane resin film thus obtained are not particularly limited, those can be in the same range as the value for the siloxane-modified polyurethane resin as component (A).

EXAMPLES

Examples, Reference Examples and Comparative Examples are given below by way of illustration.
In the following Examples, evaluations of the properties were carried out by the following method.
Hydroxyl value was measured according to JIS K 0070: 1992.
Tensile strength and elongation at break were measured at a speed of 100 mm/min using a specimen obtained by punching out a dumbbell No. 6 from a cured product sheet having a thickness of 1 mm according to the method defined in JIS K 7312: 1996.
Gas permeability coefficient was measured using a gas transmittance measurement apparatus (K-315N-01G) manufactured by Toyorika Co., Ltd., at a measurement temperature of 25°C.
The weight average molecular weight of component (A) is a polystyrene equivalent value obtained by gel permeation chromatography (GPC) under the following conditions.

[Measurement conditions]

| | |
|---|---|
| Measuring apparatus: | HLC-8320GPC manufactured by Tosoh Corporation |
| Developing solvent: | Tetrahydrofuran (THF) |
| Flow rate: | 0.6 mL/min |
| Detector: | Differential refractive index detector (RI) |
| Column: | TSK Guard column SuperH-H<br>TSKgel SuperHM-N (6.0 mm I.D. × 15 cm × 1)<br>TSKgel SuperH2500 (6.0 mm I.D. × 15 cm × 1) (all manufactured by Tosoh Corporation) |
| Column temperature: | 40°C |
| Sample injection amount: | 50 μL (THF solution having a concentration of 0.3% by weight) |

Component (a) was synthesized in the same manner as disclosed in Examples 1 to 12 and Comparative Example 1 of Japanese Patent Application No. 2022-031383.

[1] Preparation of coating agent composition

Reference Examples 1-1 to 1-3 and Comparative Examples 1-1 and 1-2

After the inside of the flask was purged with nitrogen, hydroxyl group-containing dimethylpolysiloxane as component (a) and zirconium tetraacetylacetonate as component (d) shown in Table 1 were charged, hexamethylene diisocyanate as component (b) was added thereto, and the mixture was stirred at 80°C for 2 hours. The mixture was cooled to 35°C or less, then 1,4-butanediol as component (c) was added thereto, and the mixture was stirred for 5 minutes. Thereafter, the content was transferred to a polytetrafluoroethylene vat (hereinafter, simply referred to as a vat), and heated at 120°C for 24 hours under a nitrogen atmosphere to obtain a siloxane-modified polyurethane resin (A). The weight average molecular weight of the obtained resin (A) was measured.
A lump of the obtained resin was press-molded at 210°C for 8 minutes at a molding pressure of 10 MPa to obtain a cured sheet having a thickness of 1 mm, and tensile strength and elongation at break were measured.
Similarly, a sheet having a film thickness of 500 μm was prepared by press molding in the similar manner, and permeability coefficient of carbon dioxide gas at 25°C was measured.
Further, 10% by weight of (A) resin and 90% by weight of (B) tetrahydrofuran were mixed in this ratio to obtain a coating agent composition. Solubility of this composition was evaluated by visual observation.
The amount of component (b) was 1.02 times the total number of moles of components (a) and (c).
The above results are shown in Table 1.
As shown in Table 1, when the amount of component (c) to component (a) is 1.6 mole or more, component (c) cannot be completely dissolved in THF at a concentration of 10% by weight (Comparative Examples 1-1 and 1-2).

Table 1

| Coating agent composition | | | Reference Example | | | Comparative Example | |
|---|---|---|---|---|---|---|---|
| | | | 1-1 | 1-2 | 1-3 | 1-1 | 1-2 |
| Formulation of resin composition | (a) Polyol | Component | a-3 | a-3 | a-3 | a-3 | a-3 |
| | | Molecular weight | 5,343 | 5,343 | 5,343 | 5,343 | 5,343 |
| | | Amount (g) | 112.20 | 112.20 | 106.86 | 106.86 | 106.86 |
| | | Molar ratio | 1.0 | 1.0 | 1.0 | 1.0 | 1.0 |
| | (b) Diisocyanate | Component | HDI | HDI | HDI | HDI | HDI |
| | | Molecular weight | 168 | 168 | 168 | 168 | 168 |
| | | Amount (g) | 6.48 | 7.92 | 8.23 | 8.91 | 10.28 |
| | | Molar ratio | 1.836 | 2.244 | 2.448 | 2.652 | 3.06 |
| | (c) Diol | Component | BD | BD | BD | BD | BD |
| | | Molecular weight | 90 | 90 | 90 | 90 | 90 |
| | | Amount (g) | 1.51 | 2.27 | 2.52 | 2.88 | 3.60 |
| | | Molar ratio | 0.8 | 1.2 | 1.4 | 1.6 | 2.0 |
| | (d) Catalyst amount (ppm) | | 100 | 100 | 100 | 100 | 100 |
| | Amount of siloxane (% by weight) | | 93.4 | 91.7 | 90.9 | 90.1 | 88.5 |
| Physical properties of (A) resin | Strength (MPa) | | 1.8 | 1.9 | 2.1 | 2.1 | 6.4 |
| | Elongation (%) | | 370 | 250 | 250 | 320 | 470 |
| | $CO_2$ permeability coefficient (Barrer) | | 3,090 | 2,980 | 2,920 | 2,800 | - |
| | (A) Weight average molecular weight | | 178,000 | 91,800 | 90,700 | - * | - * |
| (B) | THF, Solubility | | ◎ | ◎ | O | × ** | ×× ** |

(a) Polyol component a-3:
Hydroxyl group-containing dimethylpolysiloxane having the following general formula (8) and having an average molecular weight of 5,343 as determined from a hydroxyl value.

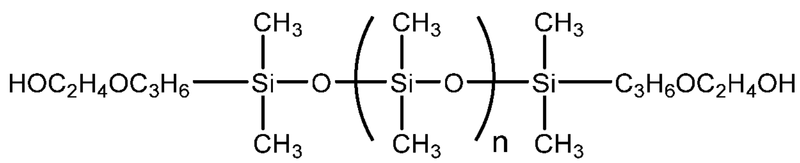
(8)

Herein, n is the number corresponding to the molecular weight.

| | |
|---|---|
| (b) Diisocyanate component HDI: | Hexamethylene diisocyanate |
| (c) Diol component BD: | 1,4-Butanediol |
| (d) Catalyst amount (ppm): | Amount to the total amount of components (a), (b), and (c) |
| Amount of siloxane: | Proportion (% by weight) of component (a) in components (a), (b), and (c) constituting the resin |

$$1 \text{ Barrer} = 1 \times 10^{-6} \text{ cm}^3 \text{ (STP)}\cdot\text{cm/(cm}^2\cdot\text{sec}\cdot\text{cmHg)}$$

THF solubility: Resin/tetrahydrofuran were mixed at a ratio of 10/90 by weight, which were stirred at 65°C for 3 hours, then air-cooled to room temperature, and outer appearance of the composition was evaluated by visual observation according to the following criteria.

- ◎ transparent solution
- ○: light milky white solution
- ×: some insoluble resin remained
- ××: resin was only swollen and almost insoluble

* No measurement was carried out since the insoluble resin was recognized by visual observation even with a concentration of 0.3% by weight.
** Even when the concentration of the compositions was lowered to 1% by weight of (A) resin/99% by weight of (B) tetrahydrofuran, it was found by visual observation that Comparative Example 1 was rated as "×" and Comparative Example 2 was rated as "××" for solubility of the coating composition. The results showed that the evaluations were the same as those with the concentration of 10% by weight and no change was observed in solubility.

Reference Examples 1-4 to 1-8

Components shown in Table 2 were blended and a siloxane-modified polyurethane resin (A) was obtained in the same manner as in Reference Example 1-1. Thereafter, the obtained resin (A) was dissolved in (B) THF to obtain a coating agent composition.
The formulation criteria of component (b), the catalyst amount addition criteria, and the calculation method of the amount of siloxane are also the same as those in Reference Example 1-1.
Tensile strength, elongation at break, permeability coefficient of carbon dioxide gas, and THF solubility were also measured and evaluated in the same manner as in Reference Example 1-1. The results are shown in Table 2.
When the resin composition and THF solubility are compared, there is a correlation between the amount of siloxane and THF solubility, and it is understood that solubility becomes better as the amount of siloxane increases.
However, when Comparative Examples 1-1 and 1-2 were compared with Reference Examples 1-6 and 1-7, it was found that there is no correlation between the amount of siloxane and THF solubility, and that THF solubility depends on the molar ratio of component (c).

Table 2

| Coating agent composition | | | Reference Example | | | | |
|---|---|---|---|---|---|---|---|
| | | | 1-4 | 1-5 | 1-6 | 1-7 | 1-8 |
| Formulation of resin composition | (a) Polyol | Component | a-3 | a-3 | a-2 | a-1 | a-0 |
| | | Molecular weight | 5,343 | 5,343 | 3,300 | 1,968 | 984 |
| | | Amount (g) | 112.20 | 112.02 | 108.90 | 100.37 | 86.59 |
| | | Molar ratio | 1.0 | 1.0 | 1.0 | 1.0 | 1.0 |
| | (b) Diisocyanate | Component | HDI | HDI | HDI | HDI | HDI |
| | | Molecular weight | 168 | 168 | 168 | 168 | 168 |
| | | Amount (g) | 5.04 | 5.76 | 10.18 | 15.73 | 27.14 |
| | | Molar ratio | 1.428 | 1.632 | 1.836 | 1.836 | 1.836 |
| | (c) Diol | Component | BD | BD | BD | BD | BD |
| | | Molecular weight | 90 | 90 | 90 | 90 | 90 |
| | | Amount (g) | 0.76 | 1.13 | 2.38 | 3.67 | 6.34 |
| | | Molar ratio | 0.4 | 0.6 | 0.8 | 0.8 | 0.8 |

(continued)

| Coating agent composition | | Reference Example | | | | |
|---|---|---|---|---|---|---|
| | | 1-4 | 1-5 | 1-6 | 1-7 | 1-8 |
| | (d) Catalyst amount (ppm) | 100 | 100 | 50 | 50 | 50 |
| | Amount of siloxane (% by weight) | 95.1 | 94.2 | 89.7 | 83.8 | 72.1 |
| Physical properties of (A) resin | Strength (MPa) | 0.2 | 0.8 | 6.6 | 7.3 | 8.6 |
| | Elongation (%) | 90 | 150 | 810 | 530 | 360 |
| | $CO_2$ permeability coefficient (Barrer) | 3,350 | 3,230 | 2,650 | 1,850 | 8,19 |
| | (A) Weight average molecular weight | 145,000 | 156,000 | 269,000 | 169,000 | 85,500 |
| (B) | THF, Solubility | ◎ | ◎ | ◎ | ○ | ○ |

Polyol component a-3: Same as defined above. Hydroxyl group-containing dimethylpolysiloxane having the general formula (8) and having an average molecular weight of 5,343 as determined from a hydroxyl value.

Polyol component a-2: Hydroxyl group-containing dimethylpolysiloxane having the general formula (8) and having an average molecular weight of 3,300 as determined from a hydroxyl value.

Polyol component a-1: Hydroxyl group-containing dimethylpolysiloxane having the general formula (8) and having an average molecular weight of 1,968 as determined from a hydroxyl value.

Polyol component a-0: Hydroxyl group-containing dimethylpolysiloxane having the general formula (8) and having an average molecular weight of 984 as determined from a hydroxyl value.

Reference Example 1-9

After the inside of the flask was purged with nitrogen, 90.83 g of (a) polyol component a-3, 16.73 g of (a) polyol component a-0, and 0.006 g of (d) zirconium tetraacetylacetonate were charged, 10.49 g of (b) hexamethylene diisocyanate was added thereto, and the resulting content was stirred at 80°C for 2 hours. The content was cooled to 35°C or less, then 2.45 g of (c) 1,4-butanediol was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 137,000.

Formulation of the resin is polyol component a-3 : polyol component a-0 : hexamethylene diisocyanate : 1,4-butanediol = 0.5 : 0.5 : 1.836 : 0.8 in a molar ratio. The amount of siloxane is 89.3% by weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 2.4 MPa, and elongation at break was 190%.

Similarly, a sheet having a film thickness of 500 μm was prepared by press molding, and permeability coefficient of carbon dioxide gas at 25°C was measured. As a result, permeability coefficient was 2,660 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

Reference Example 1-10

After the inside of the flask was purged with nitrogen, 105.60 g of (a) polyol component a-2 and 0.006 g of (d) zirconium tetraacetylacetonate were charged, 9.87 g of (b) hexamethylene diisocyanate was added thereto, and the resulting content was stirred at 80°C for 2 hours. The contents were cooled to 35°C or less, then 3.69 g of (c) 1,4-dihydroxymethylcyclohexane was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 476,000.

Formulation of the resin is polyol component a-2 : hexamethylene diisocyanate : 1,4-dihydroxymethylcyclohexane = 1.0 : 1.836 : 0.8 in a molar ratio. The amount of siloxane is 88.6% by weight.

The obtained resin was press-molded at 210°C for 8 minutes at a molding pressure of 10 MPa to obtain a cured sheet having a thickness of 1 mm, and tensile strength and elongation at break were measured. As a result, tensile strength

was 8.9 MPa, and elongation at break was 970%.

Similarly, a sheet having a film thickness of 500 μm was prepared by press molding, and permeability coefficient of carbon dioxide gas at 25°C was measured. As a result, permeability coefficient was 2,440 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

Reference Example 1-11

After the inside of the flask was purged with nitrogen, 105.60 g of (a) polyol component a-2 and 0.006 g of (d) zirconium tetraacetylacetonate were charged, 9.87 g of (b) hexamethylene diisocyanate was added thereto, and the resulting content was stirred at 80°C for 2 hours. The content was cooled to 35°C or less, then 4.10 g of (c) 1,9-nonanediol was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 515,000.

Formulation of the resin is polyol component a-2 : hexamethylene diisocyanate : 1,9-nonanediol = 1.0 : 1.836 : 0.8 in a molar ratio. The amount of siloxane is 88.3% by weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 7.4 MPa, and elongation at break was 680%.

Similarly, a sheet having a film thickness of 500 μm was prepared by press molding, and permeability coefficient of carbon dioxide gas at 25°C was measured. As a result, permeability coefficient was 2,330 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

Reference Example 1-12

After the inside of the flask was purged with nitrogen, 102.30 g of (a) polyol component a-2 and 0.006 g of (d) zirconium tetraacetylacetonate were charged, and 14.23 g of (b) 4,4'-diphenylmethane diisocyanate was added thereto, and the mixture was stirred at 80°C for 2 hours. The content was cooled to 35°C or less, then 2.23 g of (c) 1,4-butanediol was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 188,000.

Formulation of the resin is polyol component a-2 : 4,4'-diphenylmethane diisocyanate : 1,4-butanediol = 1.0 : 1.836 : 0.8 in a molar ratio. The amount of siloxane is 86.1% by weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 3.3 MPa, and elongation at break was 270%.

Similarly, a sheet having a film thickness of 500 μm was prepared by press molding, and permeability coefficient of carbon dioxide gas at 25°C was measured. As a result, permeability coefficient was 2,400 Barrer.

Further, 10% by weight of (A) resin and 90% by weight of (B) tetrahydrofuran were mixed in this ratio to obtain a coating agent composition. Solubility was evaluated by visual observation, and it was found that the composition gave a milky white appearance and the resin dissolved.

Also, 5% by weight of (A) resin and 95% by weight of (B) tetrahydrofuran were mixed to obtain a coating agent composition. Solubility was evaluated by visual observation, and it was found that the composition gave a transparent appearance and the resin dissolved.

Reference Example 1-13

After the inside of the flask was purged with nitrogen, 112.20 g of (a) polyol component a-3 and 0.012 g of (d) zirconium tetraacetylacetonate were charged, 6.48 g of (b) hexamethylene diisocyanate was added thereto, and the resulting content was stirred at 80°C for 2 hours. The content was cooled to 35°C or less, then 0.756 g of (c) 1,4-butanediol and 1.66 g of (c) 4,4'-diaminodiphenylmethane were added, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 154,000.

Formulation of the resin is polyol component a-3 : hexamethylene diisocyanate : 1,4-butanediol : 4,4'-diaminodiphenylmethane = 1.0 : 1.836 : 0.4 : 0.4 in a molar ratio. The amount of siloxane is 92.7% by weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 2.9 MPa, and elongation at break was 740%.

Similarly, a sheet having a film thickness of 500 μm was prepared by press molding, and permeability coefficient of carbon dioxide gas at 25°C was measured. As a result, permeability coefficient was 2,890 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

Reference Example 1-14

After the inside of the flask was purged with nitrogen, 63.48 g of a (a) polyol component having the following general formula (9) and having an average molecular weight of 1,058 as determined from a hydroxyl value and 0.002 g of (d) zirconium tetraacetylacetonate were added thereto, and 18.51 g of (b) hexamethylene diisocyanate was added thereto and stirred at 80°C for 2 hours. The content was cooled to 35°C or less, then 4.32 g of (c) 1,4-butanediol was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 69,100.

Formulation of the resin is polyol component : hexamethylene diisocyanate : 1,4-butanediol = 1.0 : 1.836 : 0.8 in a molar ratio. The amount of siloxane is 73.6% by weight.

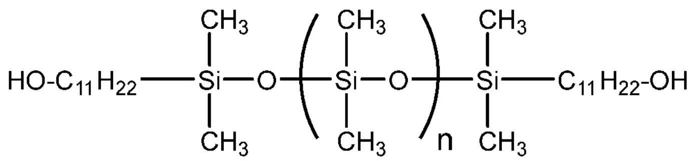

(9)

Herein, n is the number corresponding to the molecular weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 16 MPa, and elongation at break was 510%.

Similarly, a sheet having a film thickness of 500 μm was prepared by press molding, and permeability coefficient of carbon dioxide gas at 25°C was measured. As a result, permeability coefficient was 669 Barrer.

Further, 10% by weight of (A) resin and 90% by weight of (B) tetrahydrofuran were mixed in this ratio to obtain a coating agent composition. Solubility was evaluated by visual observation, and it was found that the composition gave a light milky white appearance and the resin dissolved.

Also, 5% by weight of (A) resin and 95% by weight of (B) tetrahydrofuran were mixed to obtain a coating agent composition. Solubility was evaluated by visual observation, and it was found that the composition gave a transparent appearance and the resin dissolved.

Reference Example 1-15

After the inside of the flask was purged with nitrogen, 85.71 g of a (a) polyol component having the following general formula (10) and having an average molecular weight of 963 as determined from a hydroxyl value and 0.003 g of (d) zirconium tetraacetylacetonate were added thereto, and 27.45 g of (b) hexamethylene diisocyanate was added thereto and stirred at 80°C for 2 hours. The content was cooled to 35°C or less, then 6.41 g of (c) 1,4-butanediol was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 195,000.

Formulation of the resin is polyol component : hexamethylene diisocyanate : 1,4-butanediol = 1.0 : 1.836 : 0.8 in a molar ratio. The amount of siloxane is 71.7% by weight.

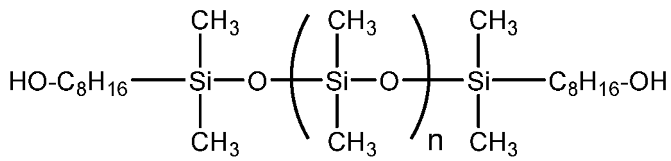

(10)

Herein, n is the number corresponding to the molecular weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 27 MPa, and elongation at break was 780%.
Similarly, a sheet having a film thickness of 500 μm was prepared by press molding, and permeability coefficient of carbon dioxide gas at 25°C was measured. As a result, permeability coefficient was 711 Barrer.

Further, 10% by weight of (A) resin and 90% by weight of (B) tetrahydrofuran were mixed in this ratio to obtain a coating agent composition. Solubility was evaluated by visual observation, and it was found that the composition gave a light milky white appearance and the resin dissolved.

Also, 5% by weight of (A) resin and 95% by weight of (B) tetrahydrofuran were mixed to obtain a coating agent composition. Solubility was evaluated by visual observation, and it was found that the composition gave a transparent appearance and the resin dissolved.

Reference Example 1-16

After the inside of the flask was purged with nitrogen, 95.86 g of (a) polyol component a-1, 2.52 g of polyethylene glycol (molecular weight: 200) and 0.006 g of (d) zirconium tetraacetylacetonate were charged, and 17.27 g of (b) hexamethylene diisocyanate was added thereto, and stirred at 80°C for 2 hours. The content was cooled to 35°C or less, then 3.40 g of (c) 1,4-butanediol was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 563,000.

Formulation of the resin is polyol component a-1 : polyethylene glycol : hexamethylene diisocyanate : 1,4-butanediol = 0.8 : 0.2 : 1.632 : 0.6 in a molar ratio. The amount of siloxane is 80.5% by weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 15 MPa, and elongation at break was 930%.

Similarly, a sheet having a film thickness of 500 μm was prepared by press molding, and permeability coefficient of carbon dioxide gas at 25°C was measured. As a result, permeability coefficient was 1,710 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

Reference Example 1-17

After the inside of the flask was purged with nitrogen, 101.64 g of (a) polyol component a-2, 2.67 g of polypropylene glycol (molecular weight: 202), and 0.006 g of (d) zirconium tetraacetylacetonate were charged, 13.57 g of (b) hexamethylene diisocyanate was added thereto, and stirred at 80°C for 2 hours. The content was cooled to 35°C or less, then 3.17 g of (c) 1,4-butanediol was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 117,000.

Formulation of the resin is polyol component a-2 : polypropylene glycol : hexamethylene diisocyanate : 1,4-butanediol = 0.7 : 0.3 : 1.836 : 0.8 in a molar ratio. The amount of siloxane is 84.0% by weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 6.5 MPa, and elongation at break was 640%.

Similarly, a sheet having a film thickness of 500 μm was prepared by press molding, and permeability coefficient of carbon dioxide gas at 25°C was measured. As a result, permeability coefficient was 2,140 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

Example 1-18

After the inside of the flask was purged with nitrogen, 105.92 g of (a) polyol component having the following general formula (11) and having an average molecular weight of 3,310 as determined from a hydroxyl value and 0.006 g of (d) zirconium tetraacetylacetonate were added thereto, and 9.87 g of (b) hexamethylene diisocyanate was added thereto and stirred at 80°C for 2 hours. The content was cooled to 35°C or less, then 2.30 g of (c) 1,4-butanediol was added thereto, and the mixture was stirred for 5 minutes. Thereafter, the content was transferred to a vat, and heated at 120°C for 24 hours

under a nitrogen atmosphere to obtain a siloxane-modified polyurethane resin (A). The weight average molecular weight of the obtained resin (A) was 297,000.

Formulation of the resin is polyol component : hexamethylene diisocyanate : 1,4-butanediol = 1.0 : 1.836 : 0.8 in a molar ratio. The amount of siloxane is 89.7% by weight.

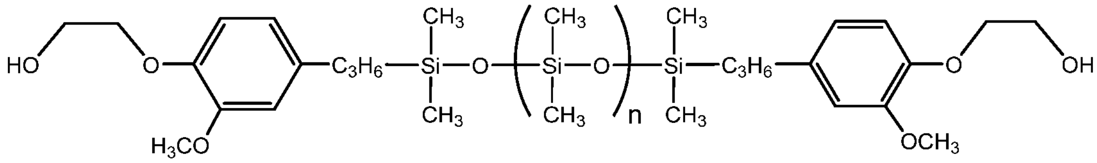 (11)

Herein, n is the number corresponding to the molecular weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 6.8 MPa, and elongation at break was 620%.

Similarly, a sheet having a film thickness of 500 μm was prepared by press molding, and permeability coefficient of carbon dioxide gas at 25°C was measured. As a result, permeability coefficient was 2,270 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

<u>Example 1-19</u>

After the inside of the flask was purged with nitrogen, 98.83 g of (a) polyol component having the general formula (11) and having an average molecular weight of 3,310 as determined from a hydroxyl value, and 0.006 g of (d) zirconium tetraacetylacetonate were charged, 16.85 g of (b) isophorone diisocyanate was added thereto, and stirred at 80°C for 2 hours. The contents were cooled to 35°C or less, then 6.25 g of (c) 1,4-dihydroxymethylcyclohexane was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 491,000.

Formulation of the resin is polyol component : isophorone diisocyanate : 1,4-dihydroxymethylcyclohexane = 1.0 : 2.448 : 1.4 in a molar ratio. The amount of siloxane is 81.1% by weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 12 MPa, and elongation at break was 740%.

Similarly, a sheet having a film thickness of 500 μm was prepared by press molding, and permeability coefficient of carbon dioxide gas at 25°C was measured. As a result, permeability coefficient was 1,750 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

<u>Example 1-20</u>

After the inside of the flask was purged with nitrogen, 105.34 g of (a) polyol component having the general formula (12) and having an average molecular weight of 4,580 as determined from a hydroxyl value, and 0.012 g of (d) zirconium tetraacetylacetonate were charged, 9.37 g of (b) isophorone diisocyanate was added thereto, and stirred at 80°C for 2 hours. The content was cooled to 35°C or less, then 30 mL of tetrahydrofuran and 3.13 g of (c) isophoronediamine were added, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 59,000.

Formulation of the resin is polyol component : isophorone diisocyanate : isophoronediamine = 1.0 : 1.836 : 0.8 in a molar ratio. The amount of siloxane is 89.4% by weight.

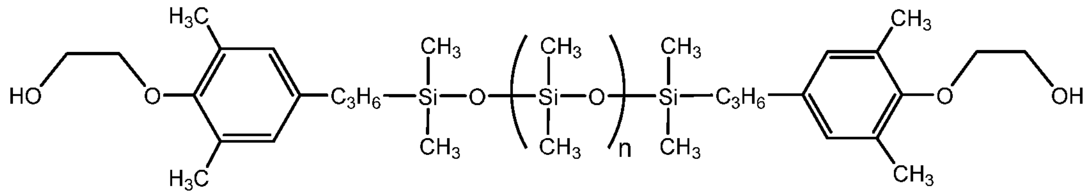

(12)

Herein, n is the number corresponding to the molecular weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 1.5 MPa, and elongation at break was 100%.

Similarly, a sheet having a film thickness of 500 μm was prepared by press molding, and permeability coefficient of carbon dioxide gas at 25°C was measured. As a result, permeability coefficient was 2,370 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

Reference Example 1-21

After the inside of the flask was purged with nitrogen, 99.00 g of (a) polyol component a-2 and 0.012 g of (d) zirconium tetraacetylacetonate were charged, 19.24 g of (b) 4,4'-dicyclohexylmethane diisocyanate was added thereto, and stirred at 80°C for 2 hours. The content was cooled to 35°C or less, then 3.78 g of (c) 1,4-butanediol was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 124,000.

Formulation of the resin is polyol component a-2 : 4,4'-dicyclohexylmethane diisocyanate : 1,4-butanediol = 1.0 : 2.448 : 1.4 in a molar ratio. The amount of siloxane is 81.1% by weight.

The obtained resin was press-molded at 210°C for 8 minutes at a molding pressure of 10 MPa to obtain a cured sheet having a thickness of 1 mm, and tensile strength and elongation at break were measured. As a result, tensile strength was 3.0 MPa, and elongation at break was 140%.

Similarly, a sheet having a film thickness of 500 μm was prepared by press molding, and permeability coefficient of carbon dioxide gas at 25°C was measured. As a result, permeability coefficient was 2,200 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

Reference Example 1-22

After the inside of the flask was purged with nitrogen, 106.86 g of (a) polyol component a-3, 5.06 g of polypropylene glycol (molecular weight: 1,011), and 0.012 g of (d) zirconium tetraacetylacetonate were charged, 6.93 g of cyclohexane-1,4-diylbis(methylene)diisocyanate (Fortimo manufactured by Mitsui Chemicals, Inc.) having the following formula (13) and serving as component (b) was added thereto, and stirred at 80°C for 2 hours. The content was cooled to 35°C or less, then 0.90 g of (c) 1,4-butanediol was added thereto, and the mixture was stirred for 5 minutes. Thereafter, the content was transferred to a vat, and heated at 120°C for 24 hours under a nitrogen atmosphere to obtain a siloxane-modified polyurethane resin (A). The weight average molecular weight of the obtained resin (A) was 475,000.

Formulation of the resin is polyol component a-3 : polypropylene glycol : cyclohexane-1,4-diylbis(methylene) diisocyanate : 1,4-butanediol = 0.8 : 0.2 : 1.428 : 0.4 in a molar ratio. The amount of siloxane is 89.2% by weight.

[Cyclohexane-1,4-diylbis(methylene)diisocyanate]

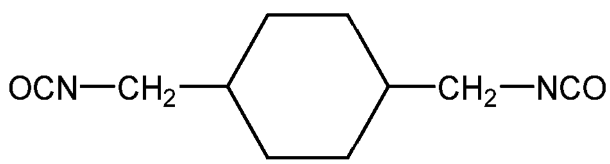

(13)

The obtained resin was press-molded at 210°C for 8 minutes at a molding pressure of 10 MPa to obtain a cured sheet having a thickness of 1 mm, and tensile strength and elongation at break were measured. As a result, tensile strength was 3.7 MPa, and elongation at break was 900%.

Similarly, a sheet having a film thickness of 500 μm was prepared by press molding, and permeability coefficient of carbon dioxide gas at 25°C was measured. As a result, permeability coefficient was 2,460 Barrer.

Further, 10% by weight of (A) resin and 90% by weight of (B) tetrahydrofuran were mixed in this ratio to obtain a coating agent composition. Solubility was evaluated by visual observation, and it was found that the composition gave a transparent appearance and the resin dissolved.

[2] Preparation of coating film

<u>Reference Examples 2-1 to 2-17, Examples 2-18 to 2-20, and Reference Examples 2-21 and 2-22</u>

40.0 g of each of the coating agent compositions obtained in Reference_Examples 1-1 to 1-17, Examples 1-18 to 1-20, and Reference Examples 1-21 and 1-22 was placed in a mold (17 cm × 13 cm × 0.2 cm) having a stainless steel (SUS) surface coated with polytetrafluoroethylene, and dried at room temperature (25°C) for 12 hours to obtain a coating film having a thickness of 150 μm.

For tensile strength, elongation at break, and permeability coefficient of carbon dioxide gas of the obtained coating film, the measured values of the siloxane-modified polyurethane resin used in Examples 1-1 to Reference 1-17, Examples 1-18 to 1-20, and Reference Examples 1-21 and 1-22 can be applied, respectively.

## Claims

1. A siloxane-modified polyurethane resin coating agent composition comprising the following components (A) and (B):

(A) a siloxane-modified polyurethane resin; and
(B) a volatile organic solvent having a boiling point of 180°C or less at 1 atm,
wherein component (A) is a cured product of a siloxane-modified polyurethane resin composition comprising the following components (a) to (c):

(a) a hydroxyl group-containing organosilicon compound having the following formula (1):

$$(R^1_3SiO_{1/2})_k(R^1_2SiO_{2/2})_p(R^1SiO_{3/2})_q(SiO_{4/2})_r \qquad (1)$$

wherein $R^1$ is each independently a monovalent hydrocarbon group of 1 to 10 carbon atoms or a group selected from the following formulas (2) and (3) with the proviso that two of all $R^1$ groups are groups having the following formula (3), k, p, q, and r are an integer of $k > 0$, an integer of $p \geq 0$, an integer of $q \geq 0$, and an integer of $r \geq 0$, respectively, provided that k+p+q is an integer of $k+p+q \geq 2$, and an arrangement of the siloxane units in parentheses is indefinite,

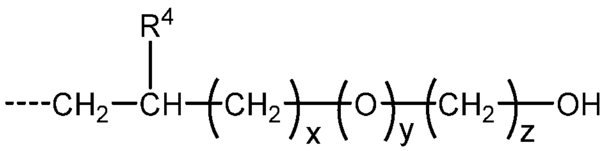

(2)

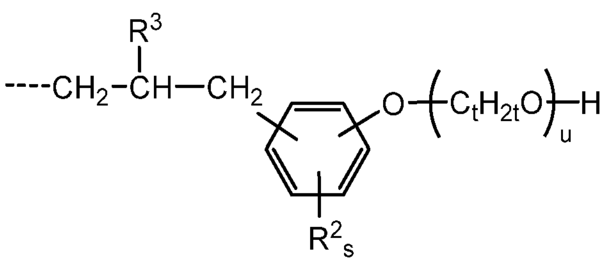

(3)

wherein in formula (2), $R^4$ is hydrogen or methyl, x is an integer of 0 to 4, y is 0 or 1, and z is an integer of 0 to 6, when y is 1, x is an integer of 0 to 4, z is an integer of 1 to 6, and x+z is an integer of 1 to 10, and when y is 0, x is an integer of 0 to 4, z is an integer of 0 to 6, and x+z is an integer of 1 to 10,
in formula (3), $R^2$ is each independently hydrogen or a group selected from a monovalent hydrocarbon group of 1 to 5 carbon atoms and an alkoxy group of 1 to 5 carbon atoms, $R^3$ is hydrogen or methyl, s is an integer of 0 to 4, t is an integer of 2 to 4, u is a number of 1 to 3, and a broken line donates a valence bond;

(b) a diisocyanate compound having two isocyanate groups per molecule; and
(c) an organic compound having two functional groups per molecule capable of reacting with an isocyanate group,

wherein amounts of components (a) to (c) are m mole of component (c) and (1+m) × (0.9 to 1.2) mole of component (b) each per 1 mole of component (a), and m is 0.2 mole or more and less than 1.6 moles, and wherein a content of component (B) is 50 to 98% by weight of the whole coating agent composition.

**2.** The coating agent composition of claim 1, wherein y in the group of formula (2) is 0.

**3.** The coating agent composition of claim 1 or 2, wherein a group of formula (3) is a group having the following formula (3.1a), (3.2a), or (3.3a):

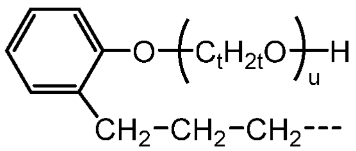

(3.1a)

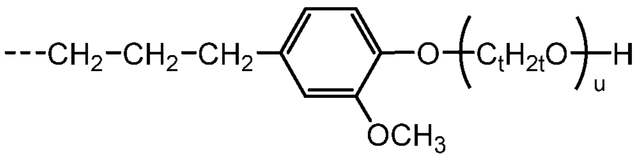

(3.2a)

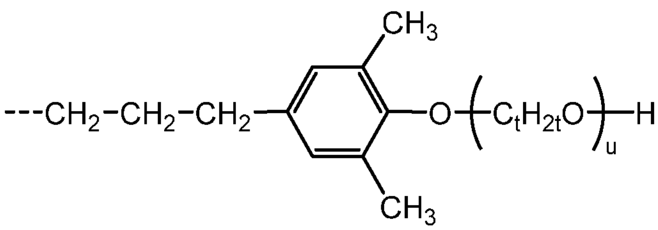

(3.3a)

wherein t and u are as defined above, and a broken line denotes a valence bond.

**4.** The coating agent composition of any one of claims 1 to 3, wherein component (b) has the following formula (7):

OCN-Q-NCO (7)

wherein Q is a divalent hydrocarbon group of 1 to 20 carbon atoms.

**5.** The coating agent composition of claim 4, wherein in formula (7), Q is a linear or branched alkylene group or an alkylene group having an alicyclic structure.

**6.** The coating agent composition of any one of claims 1 to 5, wherein component (B) contains an oxygen atom in a molecule and has a boiling point of 120°C or less at 1 atm.

**7.** The coating agent composition of any one of claims 1 to 6, wherein the siloxane-modified polyurethane resin composition further contains (d) a urethane curing catalyst.

**8.** A coating film formed from the coating agent composition of any one of claims 1 to 7.

**9.** An article comprising the coating film of claim 8.

## Patentansprüche

**1.** Siloxan-modifizierte Polyurethanharz-Beschichtungsmittel-Zusammensetzung, welche die folgenden Komponenten (A) und (B) umfasst:

(A) ein Siloxan-modifiziertes Polyurethanharz und
(B) ein flüchtiges organisches Lösungsmittel mit einem Siedepunkt von 180 °C oder weniger bei 1 atm;
wobei die Komponente (A) ein gehärtetes Produkt aus einer Siloxan-modifizierten Polyurethanharz-Zusammensetzung ist, welche die folgenden Komponenten (a) bis (c) umfasst:

(a) eine Hydroxylgruppen-hältige Organosilicium-Verbindung der folgenden Formel (1):

$$(R^1_3SiO_{1/2})_k(R^1_2SiO_{2/2})_p(R^1SiO_{3/2})_q(SiO_{4/2})_r \qquad (1)$$

worin die $R^1$ jeweils unabhängig eine einwertige Kohlenwasserstoffgruppe mit 1 bis 10 Kohlenstoffatomen oder eine aus den folgenden Formeln (2) und (3) ausgewählte Gruppe sind, mit der Maßgabe, dass zwei aller Gruppen $R^1$ Gruppen der folgenden Formel (3) sind, k, p, q und r ganze Zahlen sind, wobei $k > 0$ ist, $p \geq 0$ ist, $q \geq 0$ ist und $r \geq 0$ ist, mit der Maßgabe, dass k+p+q eine ganze Zahl ist, für die gilt: $k+p+q \geq 2$, und die Anordnung der SiloxanEinheiten in Klammern unbestimmt ist,

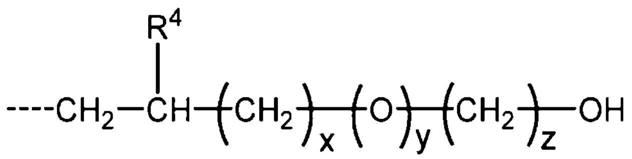
(2)

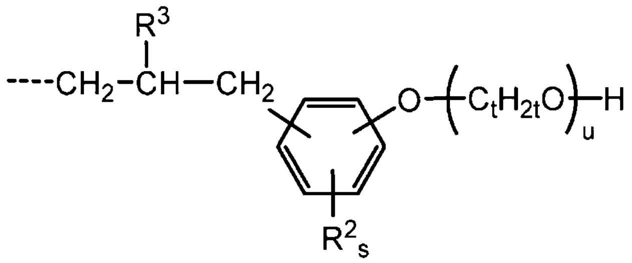
(3)

wobei in Formel (2) $R^4$ Wasserstoff oder Methyl ist, x eine ganze Zahl von 0 bis 4 ist, y = 0 oder 1 ist und z eine ganze Zahl von 0 bis 6 ist, wobei, wenn y = 1 ist, x eine ganze Zahl von 0 bis 4 ist, z eine ganze Zahl von 1 bis 6 ist und x+z eine ganze Zahl von 1 bis 10 ist, und wenn y = 0 ist, x eine ganze Zahl von 0 bis 4 ist, z eine ganze Zahl von 0 bis 6 ist und x+z eine ganze Zahl von 1 bis 10 ist,
in Formel (3) die $R^2$ jeweils unabhängig Wasserstoff oder eine aus einer einwertigen Kohlenwasserstoff-Gruppe mit 1 bis 5 Kohlenstoffatomen und einer Alkoxygruppe mit 1 bis 5 Kohlenstoffatomen ausgewählte Gruppe sind, $R^3$ Wasserstoff oder Methyl ist, s eine ganze Zahl von 0 bis 4 ist, t eine ganze Zahl von 2 bis 4 ist, u eine ganze Zahl von 1 bis 3 ist und eine strichlierte Linie für eine Valenzbindung steht;

(b) eine Diisocyanat-Verbindung mit zwei Isocyanat-Gruppen pro Molekül; und
(c) eine organische Verbindung mit zwei funktionellen Gruppen pro Molekül, die in der Lage sind, mit einer Isocyanat-Gruppe zu reagieren;

wobei die Menge der Komponenten (a) bis (c) m Mol der Komponente (c) und $(1+m) \times (0{,}9$ bis $1{,}2)$ Mol der Komponente (b) pro 1 Mol von Komponente (a) beträgt und m = 0,2 Mol oder mehr und weniger als 1,6 Mol ist und

wobei der Gehalt der Komponente (B) 50 bis 98 Gew.-% der gesamten Beschichtungsmittel-Zusammensetzung ausmacht.

2. Beschichtungsmittel-Zusammensetzung nach Anspruch 1, wobei in der Gruppe der Formel (2) y = 0 ist.

3. Beschichtungsmittel-Zusammensetzung nach Anspruch 1 oder 2, wobei eine Gruppe der Formel (3) eine Gruppe der folgenden Formel (3.1a), (3.2a) oder (3.3a) ist:

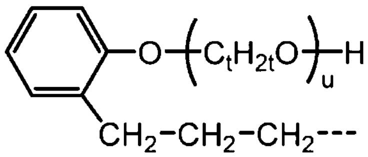

(3.1a)

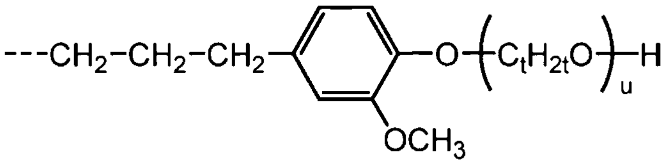

(3.2a)

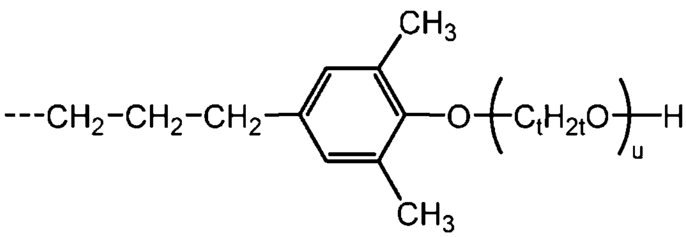

(3.3a)

worin t und u wie oben definiert sind und eine strichlierte Linie für eine Valenzbindung steht.

4. Beschichtungsmittel-Zusammensetzung nach einem der Ansprüche 1 bis 3, wobei die Komponente (b) die folgende Formel (7) aufweist:

OCN-Q-NCO (7)

worin Q eine zweiwertige Kohlenwasserstoffgruppe mit 1 bis 20 Kohlenstoffatomen ist.

5. Beschichtungsmittel-Zusammensetzung nach Anspruch 4, wobei in Formel (7) Q eine unverzweigte oder verzweigte Alkylengruppe oder eine Alkylengruppe mit einer alizyklischen Struktur ist.

6. Beschichtungsmittel-Zusammensetzung nach einem der Ansprüche 1 bis 5, wobei die Komponente (B) ein Sauerstoffatom pro Molekül enthält und bei 1 atm einen Siedepunkt von 120 °C oder weniger aufweist.

7. Beschichtungsmittel-Zusammensetzung nach einem der Ansprüche 1 bis 6, wobei die Siloxan-modifizierte Polyurethanharz-Zusammensetzung weiters (d) einen Urethan-Härtungskatalysator enthält.

8. Beschichtungsfilm, der aus einer Beschichtungsmittel-Zusammensetzung nach einem der Ansprüche 1 bis 7 gebildet ist.

9. Gegenstand, der einen Beschichtungsfilm nach Anspruch 8 umfasst.

## Revendications

1. Composition d'agent de revêtement à base de résine de polyuréthane modifiée par du siloxane comprenant les composants (A) et (B) suivants :

(A) une résine de polyuréthane modifiée par du siloxane ; et
(B) un solvant organique volatil présentant un point d'ébullition de 180 °C ou moins à 1 atm, dans laquelle le composant (A) est un produit durci d'une composition de résine de polyuréthane modifiée par du siloxane comprenant les composants (a) à (c) suivants :

(a) un composé d'organosilicium contenant un groupe hydroxyle présentant la formule (1) suivante :

$$(R^1{}_3SiO_{1/2})_k(R^1{}_2SiO_{2/2})_p(R^1SiO_{3/2})_q(SiO_{4/2})_r \qquad (1)$$

dans laquelle chaque $R^1$ est indépendamment un groupe hydrocarboné monovalent de 1 à 10 atomes de carbone ou un groupe choisi parmi les formules (2) et (3) suivantes, à condition que deux de tous les groupes $R^1$ soient des groupes répondant à la formule (3) suivante, k, p, q et r sont un entier de $k > 0$, un entier de $p \geq 0$, un entier de $q \geq 0$ et un entier de $r \geq 0$, respectivement, à condition que $k + p + q$ soit un entier de $k + p + q \geq 2$, et qu'un agencement des unités de siloxane entre parenthèses soit indéfini,

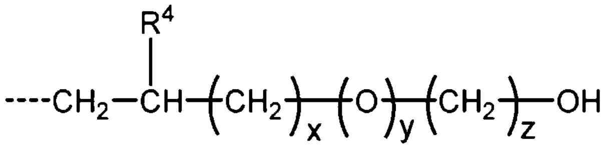
(2)

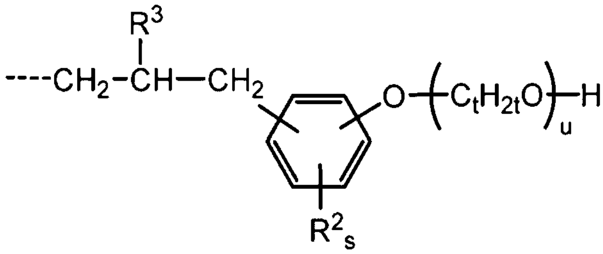
(3)

dans laquelle dans la formule (2), $R^4$ est de l'hydrogène ou un groupe méthyle, x est un entier de 0 à 4, y est 0 ou 1, et z est un entier de 0 à 6, lorsque y est 1, x est un entier de 0 à 4, z est un entier de 1 à 6, et x + z est un entier de 1 à 10, et lorsque y est 0, x est un entier de 0 à 4, z est un entier de 0 à 6, et x + z est un entier de 1 à 10,
dans la formule (3), chaque $R^2$ est indépendamment de l'hydrogène ou un groupe choisi parmi un groupe hydrocarboné monovalent de 1 à 5 atomes de carbone et un groupe alcoxy de 1 à 5 atomes de carbone, $R^3$ est de l'hydrogène ou un groupe méthyle, s est un entier de 0 à 4, t est un entier de 2 à 4, u est un nombre de 1 à 3, et une ligne brisée donne une liaison de valence ;

(b) un composé de diisocyanate présentant deux groupes isocyanate par molécule ; et
(c) un composé organique présentant deux groupes fonctionnels par molécule capable de réagir avec un groupe isocyanate,

dans laquelle les quantités de composants (a) à (c) sont m moles de composant (c) et (1 + m) X (0,9 à 1,2) moles de composant (b) chacune pour 1 mole de composant (a), et m est 0,2 mole ou plus et moins de 1,6 mole, et
dans laquelle une teneur du composant (B) est de 50 à 98 % en poids de la composition d'agent de revêtement totale.

**2.** Composition d'agent de revêtement selon la revendication 1, dans laquelle y dans le groupe de la formule (2) est 0.

**3.** Composition d'agent de revêtement selon la revendication 1 ou 2, dans laquelle un groupe de formule (3) est un groupe présentant la formule (3.1a), (3.2a) ou (3.3a) suivante :

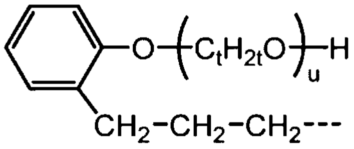

(3.1a)

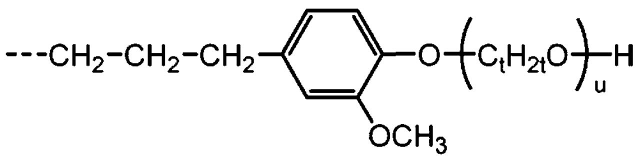

(3.2a)

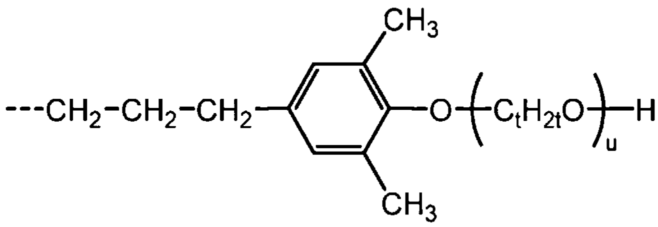

(3.3a)

dans laquelle t et u sont tels que définis ci-dessus, et une ligne brisée indique une liaison de valence.

**4.** Composition d'agent de revêtement selon l'une quelconque des revendications 1 à 3, dans laquelle le composant (b) présente la formule suivante (7) :

OCN-Q-NCO (7)

dans laquelle Q est un groupe hydrocarboné divalent de 1 à 20 atomes de carbone.

**5.** Composition d'agent de revêtement selon la revendication 4, dans laquelle dans la formule (7), Q est un groupe alkylène linéaire ou ramifié ou un groupe alkylène présentant une structure alicyclique.

**6.** Composition d'agent de revêtement selon l'une quelconque des revendications 1 à 5, dans laquelle le composant (B) contient un atome d'oxygène dans une molécule et présente un point d'ébullition de 120°C ou moins à 1 atm.

**7.** Composition d'agent de revêtement selon l'une quelconque des revendications 1 à 6, dans laquelle la composition de résine de polyuréthane modifiée par du siloxane contient en outre (d) un catalyseur de durcissement d'uréthane.

**8.** Film de revêtement formé à partir de la composition d'agent de revêtement selon l'une quelconque des revendications 1 à 7.

**9.** Article comprenant le film de revêtement selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4623347 A
- JP 2021185233 A
- JP 2010222228 A
- JP 2012224777 A
- WO 2017179738 A
- WO 2018038027 A
- JP 2022031383 A


### Non-patent literature cited in the description


- **P. M. BUDD et al.** *J. Memb. Sci.*, 2008, vol. 325, 851-860